(19) Europäisches Patentamt
European Patent Office
Office européen des brevets

(11) **EP 1 612 985 B1**

(12) **FASCICULE DE BREVET EUROPEEN**

(45) Date de publication et mention de la délivrance du brevet:
**11.11.2020 Bulletin 2020/46**

(21) Numéro de dépôt: **04291927.4**

(22) Date de dépôt: **28.07.2004**

(51) Int Cl.:
*H04L 5/14* *(2006.01)*    *H04L 25/02* *(2006.01)*

(54) **Communication bidirectionelle**

Zweiwegsvermittlung

Bidirectional communication

(84) Etats contractants désignés:
**AT BE BG CH CY CZ DE DK EE ES FI FR GB GR HU IE IT LI LU MC NL PL PT RO SE SI SK TR**

(30) Priorité: **30.06.2004 EP 04291654**

(43) Date de publication de la demande:
**04.01.2006 Bulletin 2006/01**

(73) Titulaire: **THALES DIS FRANCE SA
92190 Meudon (FR)**

(72) Inventeurs:
• **Rhelimi, Alain,
Axalto,
Intellectual Property Dpt
78431 Louveciennes Cedex (FR)**
• **Leydier, Robert,
Axalto,
Intellectual Property Dpt
78431 Louveciennes Cedex (FR)**

(74) Mandataire: **Cassagne, Philippe M.J. et al
Thales Dis France SA
Intellectual Property Department
6, rue de la Verrerie
92190 Meudon (FR)**

(56) Documents cités:
EP-A- 0 406 718      EP-A- 0 583 716
EP-A- 0 798 901      WO-A-01/30029
WO-A-2005/015816    DE-A1- 4 201 468
US-B1- 6 188 314

## Description

### DOMAINE TECHNIQUE DE L'INVENTION

L'invention se rapporte à un dispositif et à un procédé de communication numérique bidirectionnelle et simultanée entre un transmetteur dit maître et au moins un transmetteur dit esclave, reliés par un fil de liaison actif (un transmetteur étant défini comme un couple émetteur et récepteur).

Une application du dispositif et du procédé de communication concerne l'interfaçage entre au moins deux dispositifs par l'intermédiaire d'un connecteur unique (par exemple une clef électronique et une serrure électronique).

### ETAT DE LA TECHNIQUE ANTERIEURE

Il existe de nombreuses techniques pour faire communiquer plusieurs systèmes électroniques. Le choix d'une technique est lié aux contraintes techniques de l'environnement, par exemple : la vitesse de transmission, la distance entre les systèmes, la puissance électrique disponible pour les moyens de transmission, le médium de communication (radio fréquence, infrarouge, filaire,...) et leurs caractéristiques (câble blindé, fibre optique,...).

Les brevets US 5,619,066 et US 5,517,015 décrivent des dispositifs et méthode de communication sur un seul fil entre un système maître (hôte) et un système esclave (module).

Une autre méthode de communication connue est la communication dite "half duplex". Le système maître transmet de l'énergie et des informations à un système esclave. Le système esclave accumule donnée et énergie. Le système esclave transmet ses informations vers le système esclave grâce à l'énergie accumulée précédemment.

Ces solutions présentent des inconvénients, notamment au regard de la limitation importante quant à la puissance transmise et des coûts. En effet, l'énergie récupérée du signal issu du système maître (hôte) est stockée dans une capacité. L'implémentation d'une capacité de forte valeur (quelques nanofarads) est coûteuse au sein d'un circuit intégré. De plus, l'utilisation d'une capacité s'accompagne d'une ondulation résiduelle peu compatible avec des technologies numériques.

Enfin, un autre dispositif de communication connu tel que le téléphone permet de transmettre des informations de manière bidirectionnelle et simultanée ainsi que de l'énergie. Une polarisation continue de la ligne téléphonique permet de télé-alimenter le poste téléphonique de l'utilisateur. La combinaison des signaux montants (du réseau public vers le poste téléphonique de l'utilisateur) et descendant (du poste téléphonique de l'utilisateur vers le réseau public) se traduit par un signal composite en tension. La connaissance du signal composite et de l'un des deux signaux, montant ou descendant, permet de générer respectivement le signal descendant ou montant.

### EXPOSE DE L'INVENTION

Dans tout l'exposé qui va suivre, un transmetteur s'entend comme un couple émetteur et récepteur.

L'invention est décrite dans les revendications annexées. Un but de l'invention est de proposer un dispositif et un procédé de communication numérique bidirectionnelle et simultanée entre un transmetteur maître et au moins un transmetteur esclave reliés par un fil de liaison actif ne présentant pas les inconvénients de l'art antérieur, en particulier ne nécessitant pas la mise ne œuvre d'un réservoir d'énergie du type capacité.

Les documents EP0406718, EP0583716 et US6188314 montrent des systèmes de communication qui utilisent un unique fil pour communiquer en modulation de tension dans un sens et en modulation de courant dans l'autre sens.

Selon l'invention, ce but est atteint par un dispositif et un procédé de communication numérique bidirectionnelle et simultanée reposant sur l'utilisation de deux grandeurs physiques et électriques différentes, à savoir une tension et un courant électrique.

Le signal maître (S1) transmis par le transmetteur maître vers le transmetteur esclave est une modulation numérique (0 ou 1 logique) en tension (VCL). Le signal esclave (S2) transmis par le transmetteur esclave vers le transmetteur maître est une modulation numérique (0 ou 1 logique) en courant (ICL). Selon un premier mode de réalisation de l'invention, les informations numériques contenues dans le signal maître S1 incluent une signalisation d'initialisation, une signalisation de synchronisation et des données.

Selon un second mode de réalisation de l'invention le signal maître inclue également le transport d'énergie.

Le tableau ci-dessous présente les différentes valeurs de modulation numérique en tension VCL et en courant ICL :

|  |  | S1 (VCL) | |
|---|---|---|---|
|  |  | 0 | 1 |
| **S2 (ICL)** | 0 | 0 mA/0 V | 0 mA/X V |
|  | 1 | Non définie | Y mA/X V |

Quand le transmetteur maître émet un signal maître S1 correspondant par convention à un 1 logique soit X Volts, alors le transmetteur esclave peut consommer un courant de Y milli Ampère correspondant par convention à un 1 logique ou ne pas consommer de courant ce qui correspond à un 0 logique.

Par conséquent, chaque fois que le transmetteur maître émet un signal maître S1 correspondant à un 1 logique ou X Volts, le transmetteur esclave est capable de transmettre un signal esclave S2. Le choix du codage du signal maître S1 va permettre de transmettre une horloge de transmission et des données en mode full duplex.

Plus précisément, la présente invention concerne un dispositif de communication bidirectionnelle comportant un transmetteur maître relié à au moins un transmetteur esclave par un fil de liaison actif, le transmetteur maître et le transmetteur esclave ayant une référence commune, le transmetteur maître étant apte à transmettre un signal maître vers le transmetteur esclave et le transmetteur esclave étant apte à transmettre un signal esclave vers le transmetteur maître, où le signal maître est une modulation numérique en tension et le signal esclave est une modulation numérique en courant.

Selon un premier mode de l'invention, le transmetteur maître et esclave sont couplés à une alimentation. Le signal maître comprend une horloge de transmission et des données.

Selon un second mode de l'invention, seul le transmetteur maître est couplé à une alimentation, le transmetteur maître transmettant un signal maître polarisé vers le transmetteur esclave. Le signal maître polarisé comprend une horloge de transmission, des données et de l'énergie.

La présente invention concerne également un procédé de communication bidirectionnelle entre un transmetteur maître et au moins un transmetteur esclave reliés par un fil de liaison actif, comportant les étapes suivantes :

> a) transmettre un signal maître, le signal maître étant une modulation numérique en tension, et
> b) transmettre un signal esclave, le signal esclave étant une modulation numérique en courant.

Selon le premier mode de l'invention, le signal maître comprend une horloge de transmission et des données. Selon le second mode de réalisation de l'invention, le procédé comporte en outre une étape de polarisation du signal maître (offset en tension) avant l'étape de transmission du signal maître du transmetteur maître vers le transmetteur esclave, le signal maître résultant étant une modulation numérique en tension laquelle comprend une horloge de transmission, des données et de l'énergie. Selon le second mode de réalisation de l'invention, le procédé comporte en outre une étape de polarisation du signal esclave (offset en courant).

Par conséquent, avec l'invention, il est possible de transmettre sur un seul fil de communication reliant deux systèmes des données numériques dans un mode de transmission simultanée et dans les deux sens (dit full duplex), une horloge synchrone des données transmises, un signal de remise à zéro et éventuellement de l'énergie.

L'invention s'applique plus particulièrement dans le domaine communications filaires rapides (<10 Mbits) et pour des systèmes contraints en énergie et en moyens physiques de connexion. L'invention peut être utilisée dans des environnements matures et fortement standardisés dans lesquels les interconnexions des systèmes sont rationalisées. Elle permet également d'assurer des chemins de migration d'anciens systèmes vers de nouveaux systèmes en conservant des interfaces électriques stables, c'est-à-dire des connecteurs normalisés. Enfin, un autre avantage de l'invention est de permettre la fabrication de moyens de communication dont les coûts de fabrication sont optimisés (volumes de fabrication élevés, coûts de fabrication réduits).

## DESCRIPTION DES FIGURES

La présente invention est illustrée par des exemples non limitatifs sur les Figures jointes, dans lesquelles des références identiques indiquent des éléments similaires:

- la Figure 1 illustre schématiquement un système de communication selon un premier mode de réalisation de l'invention sans transmission d'énergie;
- la Figure 2 illustre schématiquement un système de communication selon un second mode de réalisation de l'invention avec transmission d'énergie;
- la Figure 3 représente un schéma fonctionnel d'un système maître selon le premier mode de réalisation de l'invention;
- la Figure 4 représente un schéma fonctionnel d'un système esclave selon le premier mode de réalisation de l'invention;
- la Figure 5 représente de façon détaillée le transmetteur maître de la Figure 3;
- la Figure 6 représente de façon détaillée le transmetteur esclave de la Figure 4;
- la Figure 7 représente un schéma fonctionnel d'un système maître selon le second mode de réalisation de l'invention;
- la Figure 8 représente un schéma fonctionnel d'un système esclave selon le second mode de réalisation de l'invention;
- la Figure 9 représente un schéma fonctionnel du transmetteur maître de la Figure 7;
- la Figure 10 représente un schéma fonctionnel du transmetteur esclave de la Figure 8;
- la Figure 11 représente de façon détaillée le transmetteur maître des Figures 7 et 9;
- la Figure 12 représente de façon détaillée le transmetteur esclave des Figures 8 et 10;
- la Figure 13 illustre le codage du signal maître pour un système de communication selon le premier mode de réalisation de l'invention;
- la Figure 14 illustre le codage du signal maître polarisé pour un système de communication selon le second mode de réalisation de l'invention;
- la Figure 15 montre la forme du signal esclave;
- la Figure 16 illustre le principe de la synchronisation du signal esclave par le signal maître;
- la Figure 17 illustre le principe de l'initialisation du transmetteur esclave par le transmetteur maître;

- la Figure 18 représente de façon détaillée une première variante du décodeur de signal maître;
- les Figures 19 et 20 illustrent le principe de fonctionnement de la première variante du décodeur de signal maître;
- la Figure 21 représente de façon détaillée une seconde variante du décodeur de signal maître;
- la Figure 22 représente un signal maître correspondant à un bit de fin de réception de trame;
- la Figure 23 illustre les effets du bruit de phase sur le signal maître;
- la Figure 24 représente un schéma fonctionnel d'un circuit logique associé au transmetteur maître;
- la Figure 25 représente schématiquement une première variante de réseau comportant des transmetteurs maître et esclave selon le premier mode de réalisation de l'invention;
- la Figure 26 montre un protocole de communication sans contention pour le réseau de la Figure 25;
- les Figures 27 et 28 montre de façon détaillée des exemples de trames de bits;
- la Figure 29 représente schématiquement une seconde variante de réseau comportant des transmetteurs maître et esclave selon le premier mode de réalisation de l'invention et un répéteur de bus;
- la Figure 30 représente schématiquement un système de communication mixte comportant des transmetteurs maître et esclave selon le premier et le second mode de réalisation de l'invention;
- la Figure 31 représente schématiquement une troisième variante de réseau, dit réseau hétérogène comportant des transmetteurs maître et esclave selon le premier et le second mode de réalisation de l'invention.

## DESCRIPTION DETAILLEE DE L'INVENTION

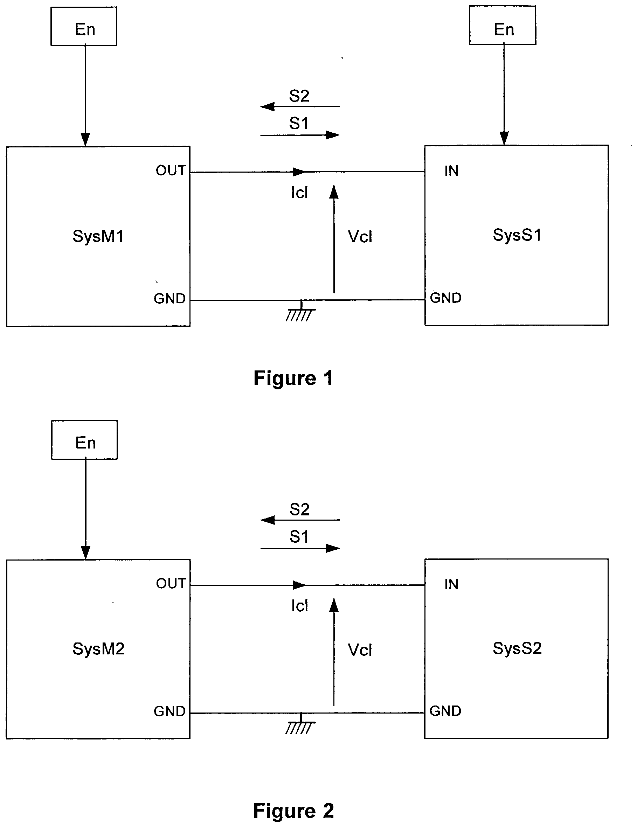

La Figure 1 montre un dispositif de communication selon un premier mode de réalisation de l'invention comprenant un système maître SysM1 relié à un système esclave SysS1. Selon ce premier mode de réalisation dit sans transmission d'énergie, les transmetteurs maître et esclave sont reliés à des moyens d'alimentation En.

Le système maître SysM1 et le système esclave SysS1 disposent tous les deux d'une connexion GND reliée à une référence commune. Avantageusement, cette référence commune est une masse analogique.

Le signal maître S1 transmis par le transmetteur maître vers le transmetteur esclave est une modulation numérique (O ou 1 logique) en tension VCL. Le signal maître S1 comporte une horloge de transmission, des données et un signal de remise à zéro (ou d'initialisation).

Le signal esclave (S2) transmis par le transmetteur esclave vers le transmetteur maître est une modulation numérique (O ou 1 logique) en courant ICL. Le signal esclave S2 comporte uniquement des données.

La Figure 2 montre un dispositif de communication selon un second mode de réalisation de l'invention comprenant un système maître SysM2 relié à un système esclave SysS2. Selon ce second mode de réalisation dit avec transmission d'énergie, seul le transmetteur maître est relié à des moyens d'alimentation En.

Le signal maître S1 comporte une horloge de transmission, des données, un signal de remise à zéro (ou d'initialisation) et de l'énergie.

Le signal esclave S2 comporte uniquement des données.

Nous allons décrire plus en détail dans un premier temps le premier mode de réalisation, puis le second mode de réalisation et enfin différents aspects de l'invention propres aux deux modes de réalisation.

## Premier mode de réalisation - **sans transfert d'énergie**

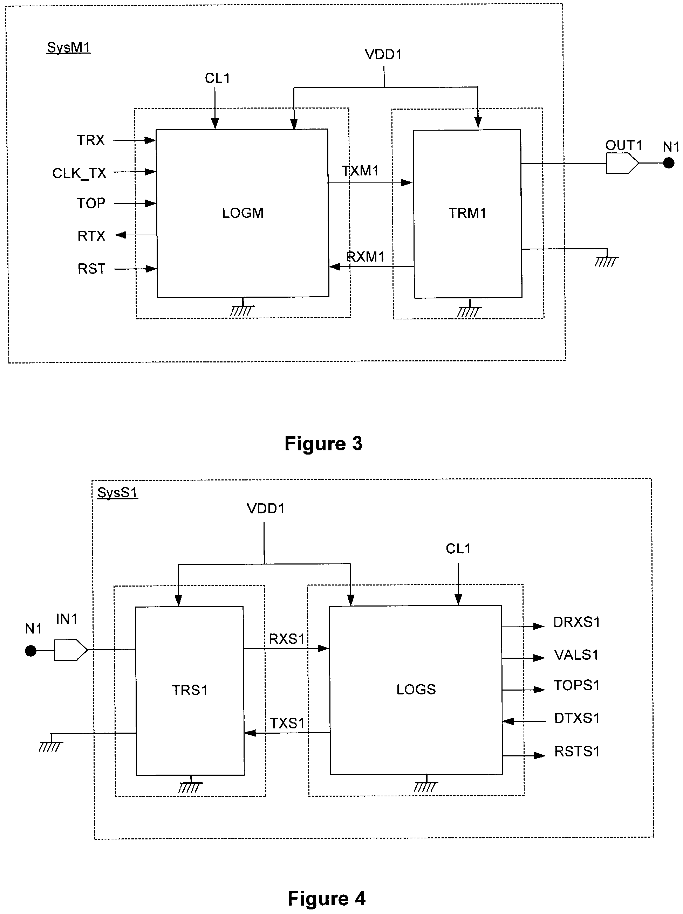

La Figure 3 représente de façon plus détaillée le système maître SysM1. Il comporte un circuit logique maître LOGM couplé à un transmetteur maître TRM1. Le circuit logique maître est couplé à un système numérique (non représenté) avec lequel il échange de manière standardisée des signaux de transmission TRX, d'émission RTX, d'initialisation RST, de synchronisation TOP, d'horloge de transmission CLK_TX. Le circuit logique LOGM reçoit un signal d'horloge interne CL1 et est alimenté par une tension VDD1. Le circuit logique maître LOGM est connecté au transmetteur maître TRM1 par une connexion pour la transmission de données TXM1 vers le transmetteur maître et par une connexion pour la réception de données RXM1 du transmetteur esclave.

Le transmetteur maître TRM1 est alimenté par la tension VDD1. Il émet et reçoit des signaux en direction d'un système esclave SysS1 par une entrée/sortie OUT1.

Le circuit logique maître LOGM et le transmetteur maître TRM1 sont reliés à une référence commune (par exemple une masse).

La Figure 4 représente de façon plus détaillée le système esclave SysS1. Le système esclave SysS1 et le système maître SysM1 sont reliés par le nœud N1.

Le système esclave SysS1 comporte un circuit logique esclave LOGS couplé à un transmetteur esclave TRS1. Le circuit logique esclave est couplé à un système numérique (non représenté) et avec lequel il échange de manière standardisée des signaux de transmission DTXS1, d'émission DRXS1, d'initialisation RSTS1, de synchronisation TOPS1 et VALS1. Le circuit logique esclave LOGS reçoit un signal d'horloge interne CL1 et est alimenté par une tension VDD1. Le circuit logique esclave LOGS est connecté au transmetteur esclave TRS1 par une connexion pour la transmission de données TXS1 vers le transmetteur esclave et par une connexion pour la réception de données RXS1 provenant du transmetteur esclave.

Le transmetteur esclave TRS1 est alimenté par la tension VDD1. Il émet et reçoit des signaux en direction du système maître SysM1 par une entrée/sortie IN1.

Le circuit logique esclave LOGS et le transmetteur esclave TRS1 sont reliés à une référence commune (par exemple une masse).

Les valeurs indiquées dans les schémas qui vont suivre, permettent une simulation analogique. Les transistors sont des modèles de type MOSFET à enrichissement standard (PMOS ou NMOS) avec une tension de transition VT de 0,5 Volt dont le rapport largeur/longueur de drain W/L est indiqué sur chaque schéma à titre d'exemple. De même, les valeurs des résistances en Ohms ou en kilo Ohms sont indiquées à titre d'exemple.

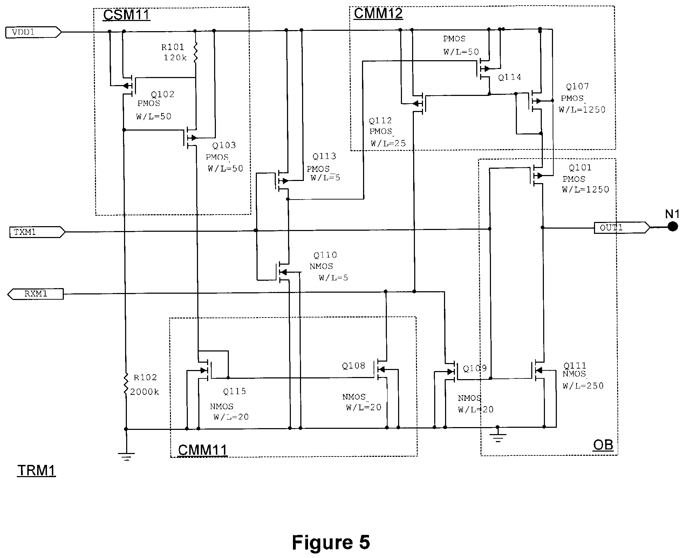

La Figure 5 montre en détail un exemple de réalisation du transmetteur maître TRM1 de la Figure 3 pour le premier mode de réalisation, sans transport d'énergie.

Le transmetteur maître TRM1 comporte une source de courant CSM11 et deux miroirs de courant CMM11 et CMM12. Il comporte également un tampon de sortie OB (buffer). Il est relié à une entrée TXM1 et à une source d'alimentation VDD1. Il possède une sortie RXM1 et une sortie OUT1 reliée au nœud N1.

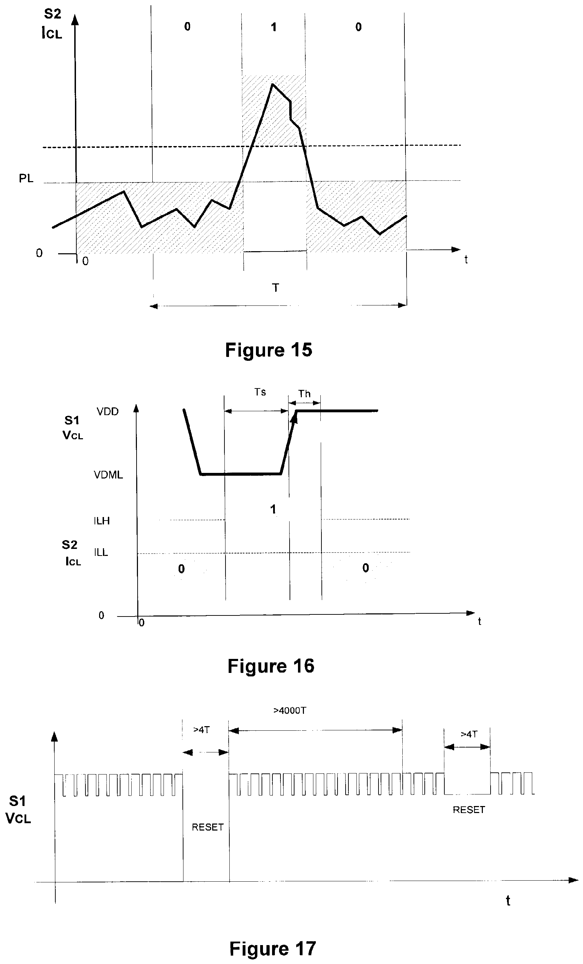

Le transmetteur maître TRM1 fonctionne de la manière suivante. Le courant qui circule dans le transistor Q112 est égal à 1/50 du courant qui traverse le transistor Q107 (miroir de courant CMM12) quand l'entrée TXM1 est au niveau 0 (le transistor Q101 est passant) et qu'un consommateur de courant est connecté à la sortie OUT1 (le transistor Q111 est bloqué). Le courant qui traverse le transistor Q108 est égal à celui qui traverse le transistor Q103 (miroir de courant CMM11 via le transistor Q115). Si le courant vers la sortie OUT1 est inférieur à 50 fois le courant qui traverse le transistor Q103 alors la sortie RXM1 vaut 0. Quand l'entrée TXM1 vaut VDD1 (c'est-à-dire un 1 logique) alors RXM1 vaut 0. Le seuil de détection ILH (voir Figure 16) de courant est égal à la valeur de la source de courant (soit environ la valeur du rapport VT/R1 où VT est la tension de transition du transistor Q101 (0,5 Volt dans l'exemple)) multiplié par le rapport des ratios W/L des transistors Q107 et Q112. Si l'impédance de sortie du transmetteur maître est faible (par exemple quelques Ohms) alors la consommation de courant sur la sortie OUT1 a peu d'impact sur le niveau du signal maître S1. L'absence du signal TXM1 pendant un temps donné est interprétée comme un signal d'initialisation du transmetteur esclave. A noter que la tension maximale de sortie est inférieure ou égale à la valeur de VDD-VT (VT étant la tension de transition du transistor Q107).

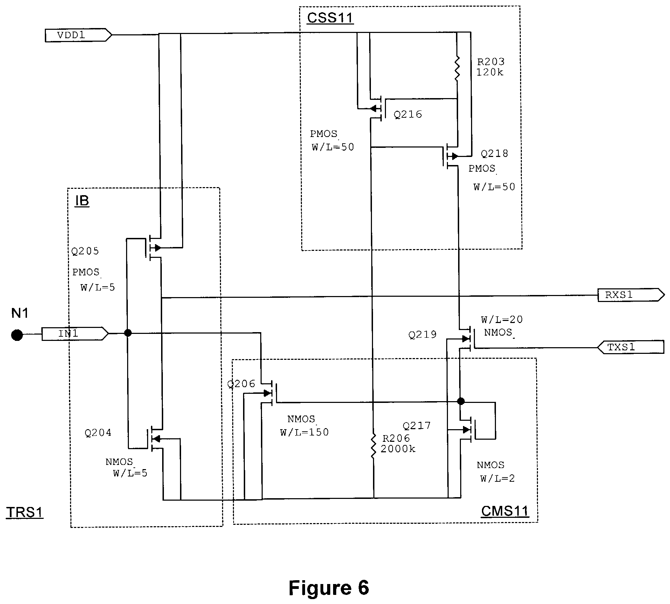

La Figure 6 montre en détail un exemple de réalisation du transmetteur esclave de la Figure 4 pour le premier mode de réalisation, sans transport d'énergie.

Le transmetteur esclave TRS1 comporte une source de courant CSS11 et un miroir de courant CMS11. Il comporte également un tampon d'entrée IB (buffer). Il est relié par l'entrée IN1 au nœud N1, à l'entrée TXS1 et à la source d'alimentation VDD1. Il possède une sortie RXS1.

Le transmetteur esclave TRS1 fonctionne de la manière suivante. Le courant qui circule dans l'entrée IN1 est égal à 75 fois le courant qui circule dans le transistor Q218 grâce au miroir de courant CMS11 (transistors Q217/Q206) et si le transistor Q219 est passant (le signal sur l'entrée TXS1 vaut la valeur de VDD1). Le signal sur la sortie RXS1 est le complément du signal IN1 grâce à l'inverseur (transistors Q205/Q204) du tampon d'entrée IB.

## Second mode de réalisation - avec transfert d'énergie

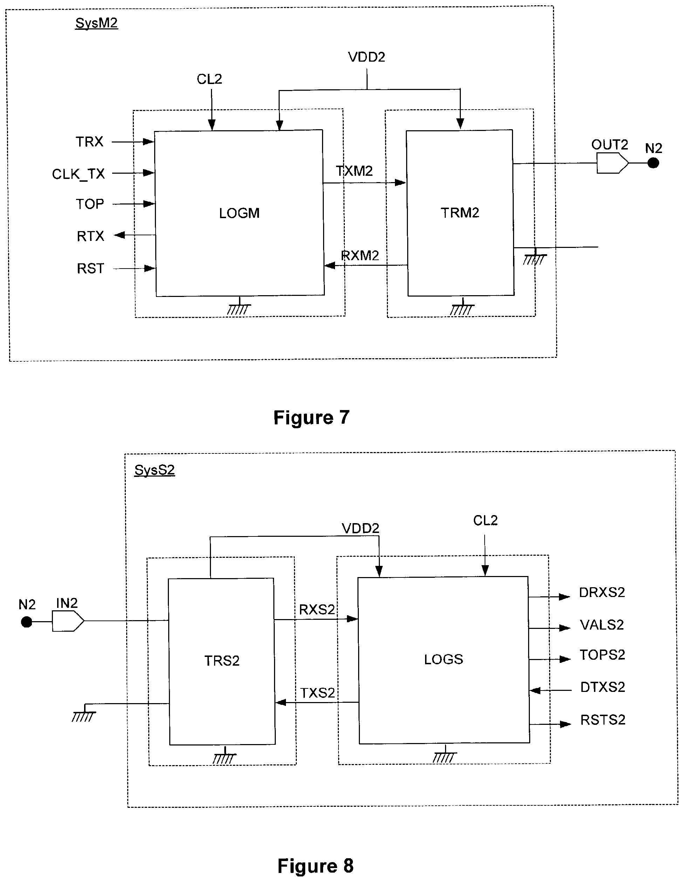

La Figure 7 représente de façon plus détaillée le système maître SysM2. Il comporte un circuit logique maître LOGM couplé à un transmetteur maître TRM2. Le circuit logique maître est couplé à un système numérique (non représenté) et avec lequel il échange de manière standardisée des signaux de transmission TRX, d'émission RTX, d'initialisation RST, de synchronisation TOP, d'horloge de transmission CLK_TX. Le circuit logique LOGM reçoit un signal d'horloge interne CL2 et est alimenté par une tension VDD2. Le circuit logique maître LOGM est connecté au transmetteur maître TRM2 par une connexion pour la transmission de données TXM2 vers le transmetteur maître et par une connexion pour la réception de données RXM2 du transmetteur maître.

Le transmetteur maître TRM2 est alimenté par la tension VDD2. Il émet et reçoit des signaux en direction d'un système esclave SysS2 par une entrée/sortie OUT2.

Le circuit logique maître LOGM et le transmetteur maître TRM2 sont reliés à une référence commune (par exemple une masse).

La Figure 8 représente de façon plus détaillée le système esclave SysS2. Le système esclave SysS2 et le système maître SysM2 sont reliés par le nœud N2.

Le système esclave SysS2 comporte un circuit logique esclave LOGS couplé à un transmetteur esclave TRS2. Le circuit logique esclave est couplé à un système numérique (non représenté) et avec lequel il échange de manière standardisée des signaux de transmission DTXS2, d'émission DRXS2, d'initialisation RSTS2, de synchronisation TOPS2 et VALS2. Le circuit logique esclave LOGS reçoit un signal d'horloge interne CL2. Le circuit logique esclave LOGS reçoit son alimentation VDD2 par le transmetteur esclave TRS2. Le circuit logique esclave LOGS est connecté au transmetteur esclave TRS2 par une connexion pour la transmission de données TXS2 vers le transmetteur esclave et par une connexion pour la réception de données RXS2 provenant du transmetteur esclave.

Le transmetteur esclave TRS2 extrait son alimentation VDD2 du signal maître S1 reçu du transmetteur maître TRM2. Il émet et reçoit des signaux en direction du système maître SysM2 par une entrée/sortie IN2.

Le circuit logique esclave LOGS et le transmetteur esclave TRS2 sont reliés à une référence commune (par exemple une masse).

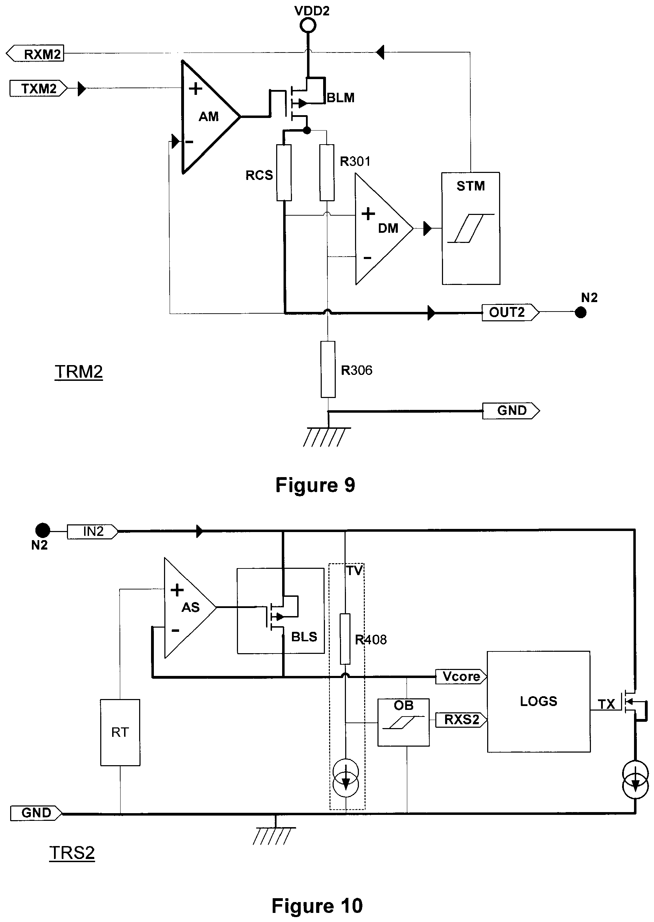

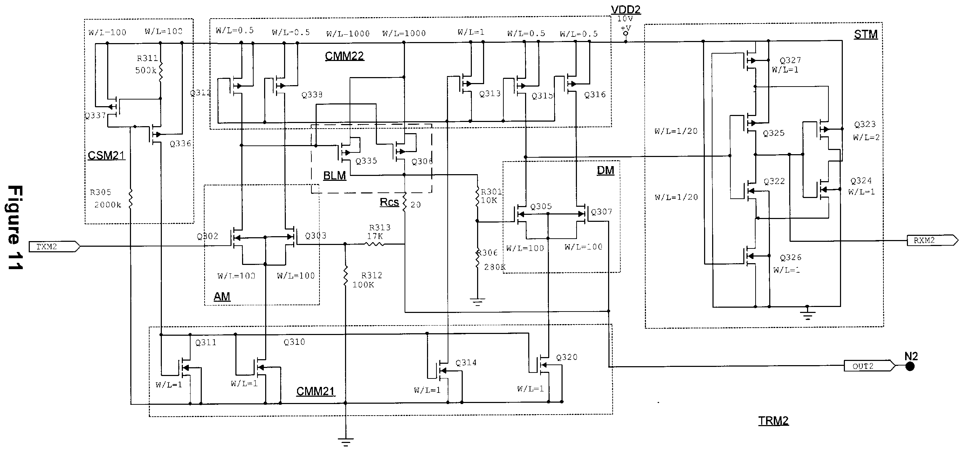

Les Figures 9 et 11 montrent en détail un exemple de réalisation du transmetteur maître TRM2 de la Figure 7 pour le second mode de réalisation, avec transport d'énergie.

Le transmetteur maître TRM2 comporte une source de courant CSM21 et deux miroirs de courant CMM21 et CMM22. Il comporte également un amplificateur AM ainsi qu'un ballast BLM en entrée, un détecteur DM ainsi qu'une résistance de mesure du courant $R_{CS}$ et un trigger de Schmitt en sortie STM. Il est relié à une entrée TXM2 et reçoit la tension d'alimentation VDD2. Il possède une sortie RXM2 et une sortie OUT2 reliée au nœud N2. Le transmetteur maître TRM2 fonctionne de la manière suivante. Le transmetteur maître TRM2 est plus complexe car le signal maître S1 est polarisé. L'amplificateur AM est un montage suiveur de tension composé des transistors Q302/Q303 pour la partie différentielle et Q335/Q306 pour l'étage de sortie du Ballast BLM. En série avec la sortie de l'amplificateur AM, la résistance $R_{CS}$ permet de mesurer le courant consommé par le transmetteur esclave. Le détecteur DM est un comparateur de tension (transistors Q305/Q307) qui bascule quand le courant de sortie vaut :

$$I_{OUT2} = V_{OUT2} \frac{R1}{Rcs \times R6}$$

Le trigger de Schmitt STM formé par les transistors Q327, Q325, Q322, Q326, Q323, Q324 permet de numériser les signaux en sortie du détecteur DM. Il est préférable de compléter ce filtrage sommaire par un filtrage numérique adéquat (non représenté) bien connu de l'homme du métier.

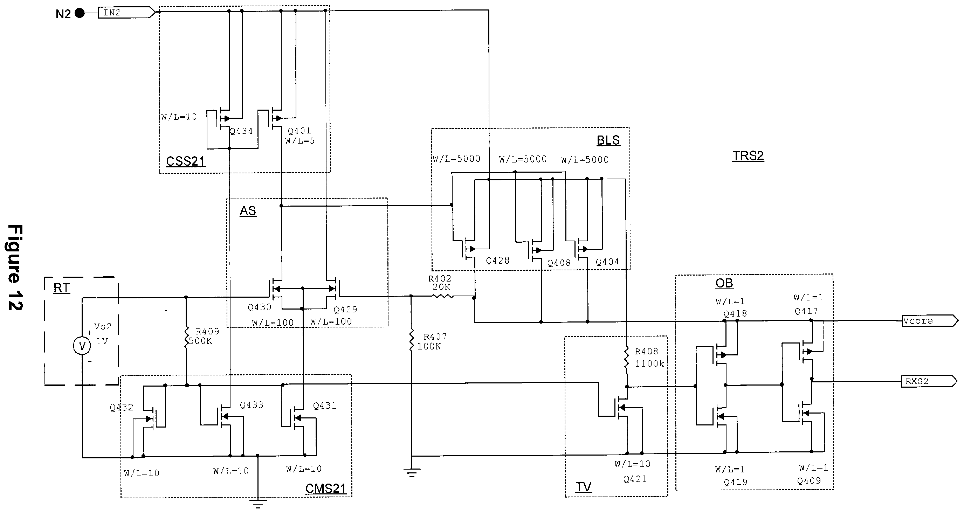

Les Figures 10 et 12 montrent en détail un exemple de réalisation du transmetteur esclave de la Figure 8 pour le second mode de réalisation, avec transport d'énergie.

Le transmetteur esclave TRS2 comporte une source de courant CSS21 et un miroir de courant CMS21. Il comporte également un régulateur série de tension composé d'un amplificateur opérationnel AS et de son transistor ballast BLS, un translateur de tension TV et un trigger de schmitt OB relié à la sortie RXS2. Le trigger de schmitt permet la remise en forme des données extraites du signal maître S1. Il est relié par l'entrée IN2 au nœud N2. Le régulateur de tension est composé d'une référence de tension RT, d'un amplificateur différentiel AS (transistors Q429/Q430) et d'un ballast BLS (transistors Q428/Q408/Q404). Le translateur de tension TV est composé de la source de courant Q421 et de la résistance R408. La remise en forme des données du signal maître S1 est réalisée par les transistors Q418/Q419 et Q417/Q409 (tampon de sortie OB). En fonctionnement normal, l'ensemble du transmetteur esclave doit consommer un courant inférieur à ILL (voir Figure 16) afin que le transmetteur maître n'interprète pas cette consommation comme une transmission de donnée.

La tension $V_{CORE}$ est la tension régulée extraite du signal maître S1 qui permet d'alimenter la logique du transmetteur esclave LOGS.

## Codage du signal maître et esclave

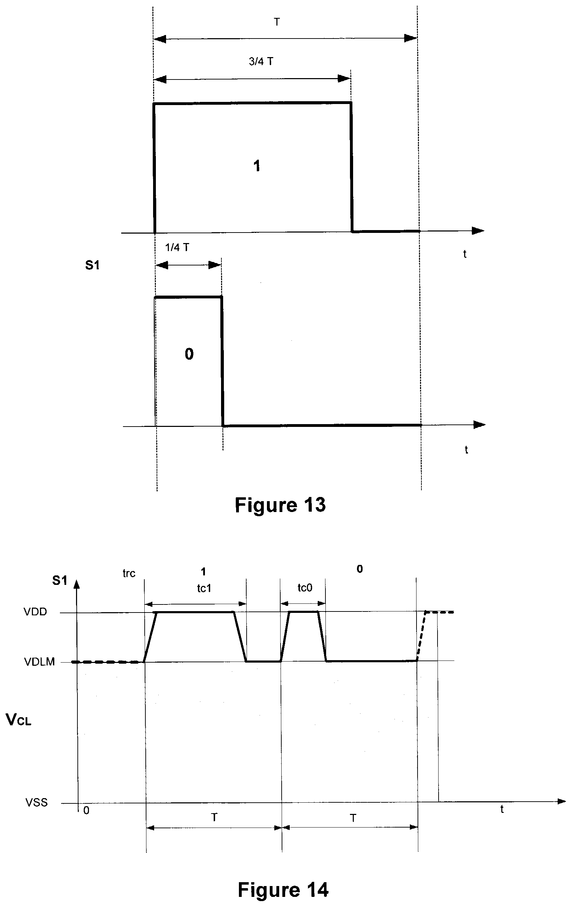

La Figure 13 illustre le codage du signal maître S1 pour un système de communication selon le premier mode de réalisation de l'invention. La période T du signal maître S1 est constante. La durée à 1 d'un 1 logique vaut trois fois la durée à 1 d'un 0 logique. Ce codage est appelé "Pulse Width Modulation" PWM ou "Return to Zéro" RZ. Avec ce codage, le signal maître S1 comprend toujours un niveau de tension haut transmis au transmetteur esclave. Le transmetteur esclave peut donc consommer un courant de Y mA et émettre le signal esclave S2. Par conséquent, avec le dispositif de communication précédemment décrit, les transmetteurs maître et esclave forment deux boucles imbriquées : une boucle en tension qui transporte le signal maître S1 et une boucle en courant qui transporte le signal esclave S2. Egalement, le signal esclave S2 doit être obligatoirement échantillonné en synchronisme avec le signal maître S1.

Ce codage est avantageux par sa simplicité de mise en œuvre. Néanmoins, d'autres types de codage peuvent être mis en œuvre (par exemple un inversement dans le codage du 0 et du 1 logique). De préférence, les rapports cycliques entre un 0 et un 1 logique doivent être suffisamment différents pour les différencier et pour être immune vis à vis du bruit de phase (jitter).

La Figure 14 illustre le codage du signal maître S1 pour un système de communication selon le second mode de réalisation de l'invention. Selon ce codage, une composante continue est ajoutée au signal maître S1. Le signal maître S1 polarisé distribue de l'énergie à l'esclave principalement lorsque sa tension est supérieure à VDLM et des données lorsque sa tension varie entre les niveaux VDLM et VDD. Le codage des 0 et 1 logique reste celui décrit précédemment en relation avec la Figure 13. Les temps respectent les équations suivantes : tc1 = 3 x tc0 et tc1 +tc0 = T.

Le transmetteur esclave décrit en relation avec les Figures 8, 10 et 12, est alimenté en tension et de manière permanente par le transmetteur maître. Il n'est pas utile de stocker de l'énergie électrique dans une capacité de stockage.

Ceci présente l'avantage d'être réalisable sous forme de circuit intégré sans condensateur de stockage d'énergie qui occuperait une surface importante et accroîtrait les coûts.

Un transmetteur esclave muni d'un simple limiteur ou régulateur de tension série suffit pour extraire l'énergie du signal maître S1.

Le même principe est appliqué au signal esclave S2 auquel un courant de polarisation est ajouté. Ce courant de polarisation correspond à la consommation maximale normale d'énergie du transmetteur esclave en fonctionnement normal. La Figure 15 montre la forme du signal esclave résultant comprenant la polarisation ainsi que les données. La puissance de fonctionnement est égale au produit du courant de polarisation du signal esclave S2 par la tension de polarisation du signal maître S1. La consommation d'un courant supérieur à celui de polarisation PL est la donnée contenue dans le signal esclave S2.

La Figure 16 illustre le principe de la synchronisation du signal esclave par le signal maître.

Les différentes valeurs du signal maître S1 et du signal esclave S2 polarisés sont:

|  |  | S1 (VCL) | |
|---|---|---|---|
|  |  | 0 | 1 |
| S2 (ICL) | 0 | < ILL VDML | < ILL VDD |
|  | 1 | >ILH VDML | >ILH VDD |

La synchronisation peut se faire indifféremment sur le front montant ou descendant du signal maître S1. Cependant, si l'économie d'énergie est un facteur important de l'environnement, la synchronisation est réalisée de façon préférentielle sur le front montant du signal maître S1.

La Figure 17 illustre le principe de l'initialisation du transmetteur esclave par le transmetteur maître.

L'initialisation du circuit logique LOGS du système esclave SysS1 ou SysS2 est réalisée quand le signal maître S1 est une fraction prédéterminée du niveau VDML. Une autre méthode consiste à suspendre l'horloge de transmission pendant un temps déterminé, par exemple 4 fois la période T.

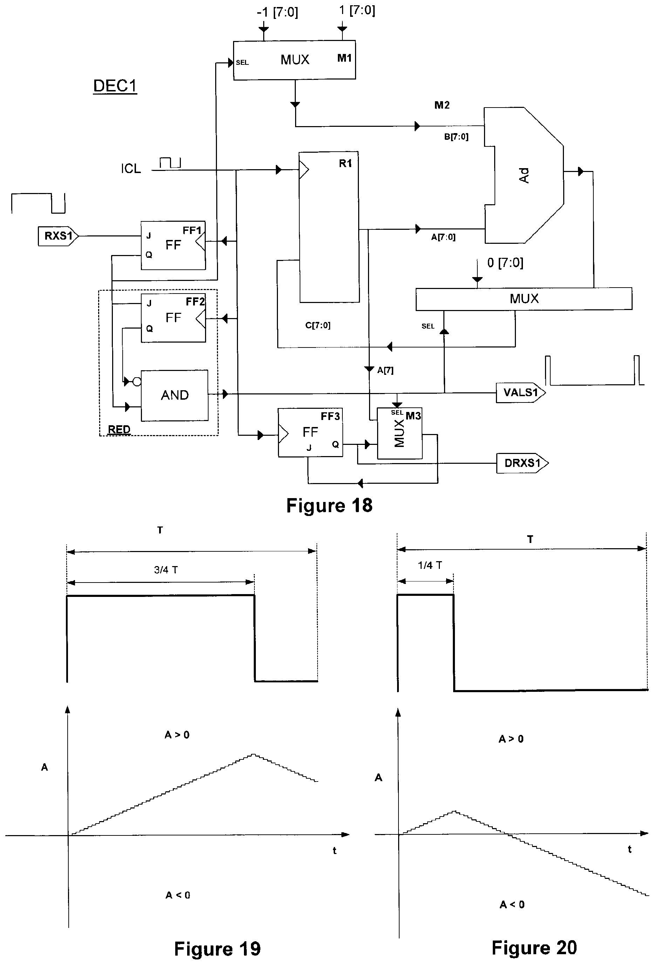

La Figure 18 représente de façon détaillée une première variante du décodeur de signal maître DEC1. Ce décodeur permet de réaliser le décodage du signal maître S1 par le système esclave SysS1 pour le premier mode de réalisation de l'invention.

Le décodeur fonctionne de la manière suivante. Le signal codé appliqué sur l'entrée RXS1 entre sur une bascule FF1 pour être synchronisé par une horloge interne ICL. L'horloge ICL doit être inférieur à T/8 et supérieur à T/128 où T est la période du signal maître S1. Quand le signal sur l'entrée RXS1 est au niveau 1 alors la sortie B du multiplexeur MUX M1 vaut 1. Le compteur formé par le registre R1 et l'additionneur Ad comptent. La sortie A du registre R1 s'incrémente sur chaque front de l'horloge ICL. Quand le signal sur l'entrée RSX1 est au niveau 0 alors la sortie B du multiplexeur MUX M1 vaut 1. La sortie A du registre R1 se décrémente sur chaque front de l'horloge ICL. Sur le front montant du signal sur l'entrée RSX1, la sortie du détecteur de front RED formé par la bascule FF2 et la porte AND vaut 1. La sortie B du multiplexeur MUX M1 vaut 0. L'entrée de la bascule FF3 vaut A[7] correspondant au signe de A. La sortie A du registre R1 vaut 0 après le front de l'horloge ICL. Par conséquent, le signal sur la sortie VALS1 du décodeur est synchrone de l'horloge interne ICL et de l'horloge de transmission intégrée au signal sur l'entrée RXS1.

Un signal apparaît sur la sortie VALS1 chaque fois qu'un bit a été décodé (0 ou 1). Ce signal cadence un registre à décalage qui dé-sérialise les bits et les range en paquet de 8 bits ou plus.

L'évolution du compteur pour un signal maître S1 codant un 1 logique est illustrée sur la Figure 19. L'évolution du compteur pour un signal maître S1 codant un 0 logique est illustrée sur la Figure 20.

La bascule FF3 permet d'échantillonner le bit de signe, lequel se retrouve sur la sortie Q de la bascule FF3 reliée à la sortie DRXS1.

L'horloge de transmission intégrée dans le signal maître S1 n'est pas utilisée pour le décodage mais est disponible sur la sortie VALS1. La sortie VALS1 peut s'interfacer avec un contrôleur de transmission de type UART (Universal Asynchronous Receiver Transmitter) ou USART (Universal Synchronous Asynchronous Receiver Transmitter). De plus, ce type de décodeur est avantageux car il tolère un fonctionnement même si l'horloge de transmission varie d'un bit à l'autre.

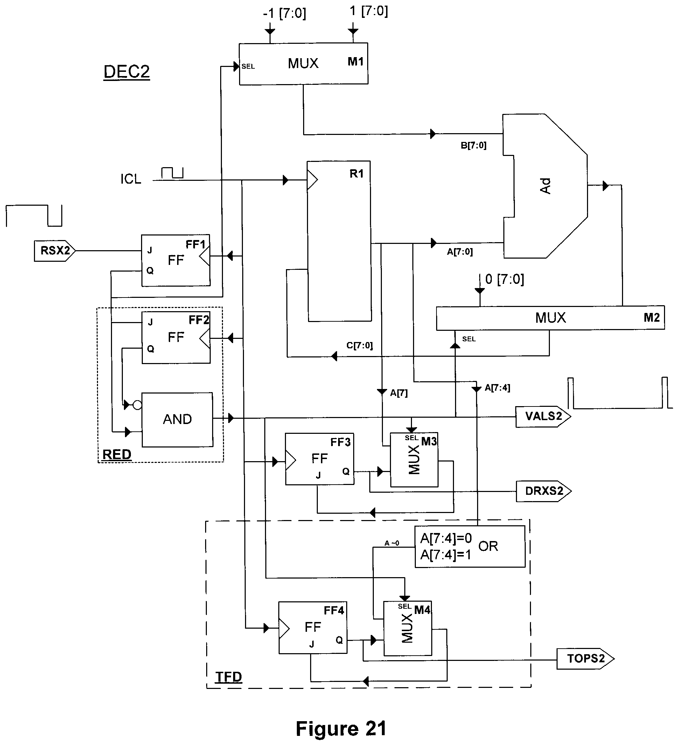

La Figure 21 représente de façon détaillée une seconde variante du décodeur de signal maître DEC2. Ce décodeur permet de réaliser le décodage du signal maître S1 par le système esclave SysS2 pour le second mode de réalisation de l'invention.

Le décodeur fonctionne de la même façon que celle décrite en relation avec la Figure 18. Le décodeur comporte en outre un détecteur de top de fin de trame TFD comportant une bascule FF4 et un multiplexeur MUX M4.

Un signal apparaît sur la sortie VALS2 chaque fois qu'un bit a été décodé (0 ou 1). Ce signal cadence un registre à décalage qui dé-sérialise les bits et les range en paquet de 8 bits ou plus.

Un signal apparaît sur la sortie TOPS2 lequel est transmis vers les transmetteurs esclaves pour signaler la réception par le transmetteur maître d'une trame. Ce signal dont le rapport cyclique vaut ½, ne porte pas de valeur logique 0 ou 1.

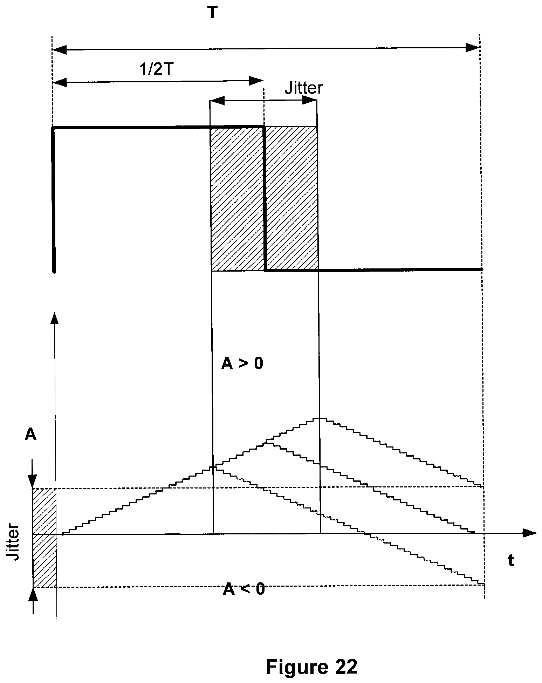

La Figure 22 montre le chronogramme du bit de fin de réception de trame émis par un transmetteur maître à la fin de la transmission d'un esclave. La modulation PWM décrite précédemment s'enrichit d'un code dont le rapport cyclique est ½. Cette valeur est aisément détectable par la seconde variante de décodeur, grâce à la mesure de la valeur absolue du signal de la sortie A qui doit être proche de zéro (dépendant du bruit de phase communément appelé "Jitter"). Le top de fin de trame peut être émis n'importe quand par le transmetteur maître dès qu'il a reçu une trame de réception complète d'un transmetteur esclave. Aussi, le top de fin de trame peut être émis au milieu d'un message destiné à un transmetteur esclave. Le top de fin de trame n'a pas de valeur logique 1 ou 0. Par conséquent, il n'est pas transmis au contrôleur de transmission de type UART/USART.

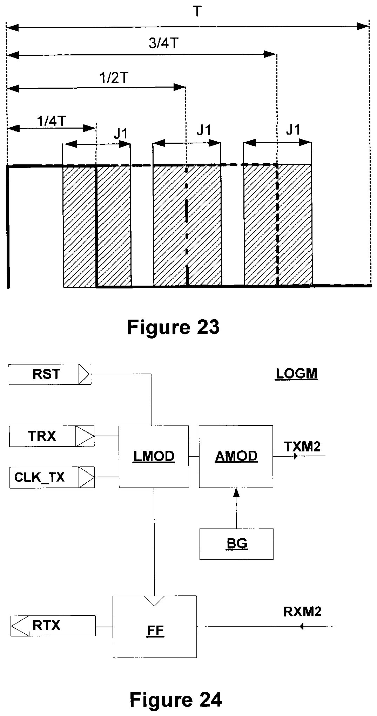

La Figure 23 illustre les effets du bruit de phase (Jitter) J1 sur le signal maître S1. Le bruit électrique influence la stabilité des horloges internes du transmetteur et la synchronisation des horloges internes du transmetteur maître et esclave. Le choix du rapport cyclique pour le 0 logique (1/4T), le 1 logique (3/4T) et pour le bit de fin de réception de trame (1/2T) est conditionné par l'importance du bruit de phase. Il faut en particulier éviter de choisir des rapports cycliques ne permettant plus de distinguer entre les différents états logiques lorsque du bruit de phase se manifeste.

La Figure 24 représente schématiquement un circuit logique pour le transmetteur maître. Le circuit logique maître LOGM est couplé à un système numérique (non représenté) avec lequel il échange de manière standardisée les signaux de transmission TRX, d'émission RTX, d'initialisation RST et d'horloge de transmission CLK_TX (voir Figure 7). Le circuit logique maître LOGM est couplé au transmetteur maître (par exemple TRM2) par les connexions TXM2 et RXM2. Le circuit logique maître LOGM comporte un modulateur logique LMOD, un modulateur analogique AMOD, une référence de tension BG et une bascule FF.

Le modulateur logique LMOD reçoit les signaux de transmission TRX et d'horloge de transmission CLK_TX et est relié au modulateur analogique AMOD et à la bascule FF. Le modulateur analogique AMOD est relié à la référence de tension BG et reçoit le signal d'initialisation RST. Il fournit le signal TXM2 à un transmetteur maître (par exemple TRM2).

La bascule laquelle reçoit le signal RX du transmetteur maître émet le signal d'émission RTX sous le contrôle du modulateur logique LMOD.

Un circuit logique maître LOGM analogue (non représenté) peut être couplé au transmetteur maître TRM1.

## Exemples de réseaux de communication

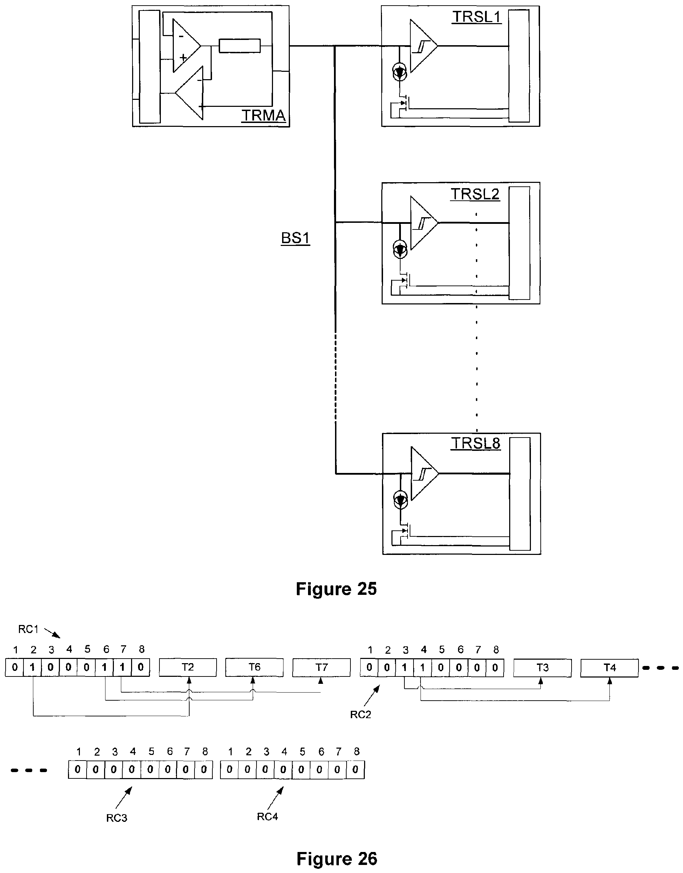

La Figure 25 représente schématiquement une première variante d'un réseau comportant des transmetteurs maître et esclave selon le premier mode de réalisation de l'invention.

Les transmetteurs sans transport d'énergie sont adaptés à un mode de fonctionnement en réseau de type BUS BS1. La topologie supportée est le BUS. Un seul transmetteur maître est utilisé s'il est souhaitable d'éviter la mise en oeuvre de mécanismes contre les contentions de bus.

Le signal maître S1 émis par le transmetteur maître TRMA est reçu par tous les transmetteurs esclaves TRSL1, TRSL2, ..., TRSL8 (formant une boucle en tension). Le courant détecté par le transmetteur maître TRMA est la somme des courants consommés par chaque transmetteur esclave TRSL1, TRSL2, ..., TRSL8. Selon le premier mode de réalisation de l'invention, par convention, aucun courant n'est consommé pour un zéro logique du signal esclave S2. Dans ce cas, le transmetteur maître TRMA reçoit un OU logique des signaux esclaves S2 des transmetteurs esclaves TRSL1, TRSL2, ..., TRSL8.

L'adressage du bus peut être réalisé de deux manières.

Selon une première manière d'adressage, le transmetteur maître TRMA, par l'intermédiaire d'un protocole de communication adapté, émet l'adresse du transmetteur esclave autorisé à émettre un signal esclave S2. Le transmetteur esclave, par exemple TRSL3, émet son message puis le transmetteur maître TRMA adresse un autre transmetteur esclave, par exemple TRSL7. Cette manière d'adressage est dite "mode d'interrogation". Selon une seconde manière d'adressage, le transmetteur maître TRMA répète le bit qu'il lit sur le bus. Si un transmetteur esclave, par exemple TRSL3, émet un 0 (pas de courant) et que le bit lu par le maître est un 1 alors un autre transmetteur esclave, par exemple TRSL7, dispose du bus. Le transmetteur esclave, par exemple TRSL3, attend alors la négociation suivante pour tenter de prendre le bus. Cette manière d'adressage est dite "mode de détection de collision".

Dans le mode détection de collision, transmetteur esclave envoyant le premier un logique dans une phase de négociation prend le bus. Trois cas sont possibles.

Selon un premier cas, chaque transmetteur esclave possède une adresse fixe. Le codage des adresses détermine la priorité d'un transmetteur esclave vis-à-vis des autres. Dans ce mode, un transmetteur esclave de faible priorité ne pourra pas communiquer si un transmetteur esclave de priorité plus forte monopolise le bus.

Selon un second cas, chaque transmetteur esclave possède une adresse fixe et le transmetteur maître répète l'adresse du transmetteur esclave. Cette approche est largement utilisée sur les réseaux de type Ethernet, en particulier dans le protocole de résolution de contention (CSMA-CR). Chaque transmetteur esclave compare le bit qu'il émet avec le bit qui est reçu et s'arrête d'émettre s'il existe une différence.

Selon un troisième cas, le protocole BITMAP est utilisé. Ce protocole est un exemple de protocole sans collision. Ce protocole fonctionne principalement si le nombre de transmetteur esclave est fixe et connu.

La Figure 26 illustre un protocole communication de type BITMAP pour le réseau de la Figure 25 comportant 8 transmetteurs esclaves. Dans la trame de résolution de contention RC1, RC2, RC3, RC4, chaque transmetteur esclave dispose d'un bit correspondant à son rang (de 1 à 8). Ce bit permet à chaque transmetteur esclave d'indiquer son souhait de communiquer avec le transmetteur maître. Par exemple, dans la trame de résolution de contention RC1, les transmetteurs esclaves 2, 6 et 7 indiquent leur souhait de respectivement transmettre les trames T2, T6 et T7 au transmetteur maître. Le bitmap de contention est diffusé sur le bus de sorte que chaque transmetteur esclave est alerté par les requêtes des autres transmetteurs esclaves. Les transmetteurs esclaves ne pouvant connaître la fin de transmission des autres transmetteurs esclaves, le transmetteur maître diffuse (broadcast) sur le bus un signal de fin de réception de trame (voir par exemple la Figure 22).

Dans le réseau de la Figure 25, le transmetteur maître peut communiquer avec tous les transmetteurs esclaves, mais les transmetteurs esclaves ne peuvent pas communiquer entre eux. En effet, seul le transmetteur maître est capable d'interpréter le signal S2 en courant émis par les transmetteurs esclaves. Le transmetteur maître peut passer à un mode de diffusion générale dans lequel il répète systématiquement les bits émis par un transmetteur esclave. Ainsi, le message transmis par un des transmetteurs esclaves est diffusé sur l'ensemble du bus (Broadcasting).

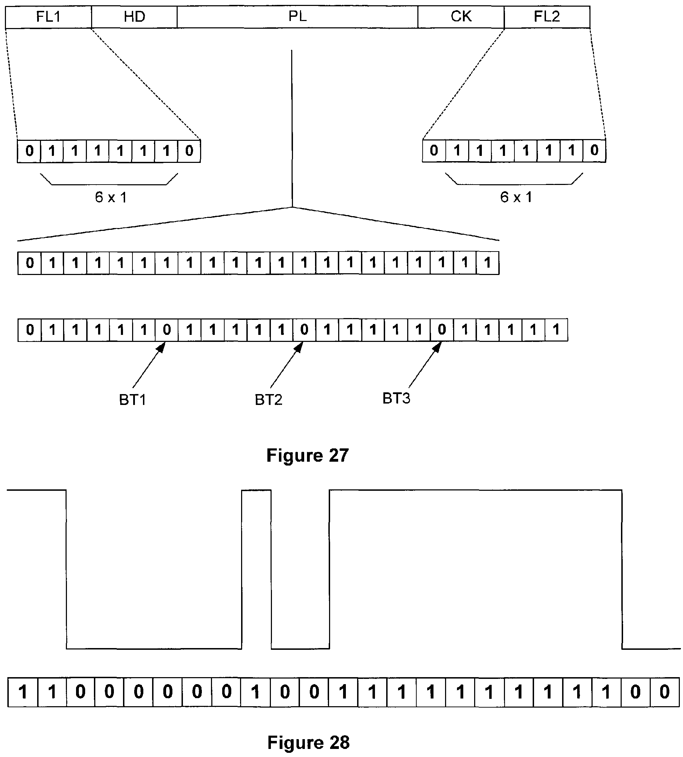

La Figure 27 illustre une trame de bits générique et son codage utilisé pour la communication entre le transmetteur maître et les transmetteurs esclaves lorsque le bus est dit "orienté trame de bits".
Une trame commence par un fanion de départ FL1 et termine par un fanion de fin FL2. Les fanions sont identifiables par un circuit logique adéquat (non représenté). Entre les fanions, la trame comporte un en-tête HD, des données PL et un code de contrôle CK. De manière classique, la technique connue de l'insertion de bit (ou "bit stuffing") est utilisée. Par convention, seuls les fanions FL1 et FL2 peuvent avoir 6 bits à un 1 logique consécutifs. Dans les autres cas, un circuit électronique spécifique est chargé :

- à l'émission, d'insérer un zéro logique afin d'obtenir des séquences de 5 bits à 1 logique consécutifs;
- à la réception, d'extraire les zéros de transparences pour reconstituer les trames originales.

Lorsque la communication entre le transmetteur maître et les transmetteurs esclaves est effectuée par bus dit "orienté signal", les signaux RX et TX décodés portent une information binaire qui peut être utilisé pour transmettre des chronogrammes discrétisés comme illustré dans la Figure 28. Par exemple, il est possible de transmettre des signaux RX et TX d'un UART paramétré pour fonctionner à 100 KBits/s avec un bus paramétré à 2 Mbits/s. Il est également possible de moduler un signal RC5 de télécommande infrarouge grâce à ce type communication. Une combinaison peut être réalisée si le codage de la Figure 28 est inséré dans une trame orientée bit décrit en relation avec la Figure 27 (bus orienté trame de bits).

Lorsque la communication entre le transmetteur maître et les transmetteurs esclaves est effectuée par bus dit "orienté caractère ", les signaux RX et TX décodés peuvent être routés directement vers un UART. Un bit à zéro est alors considéré comme un bit de départ ("start bit"). Un facteur de débit peut être obtenu si plusieurs bits à 1 ou 0 sont nécessaires pour transmettre/recevoir un bit vers/de l'UART.

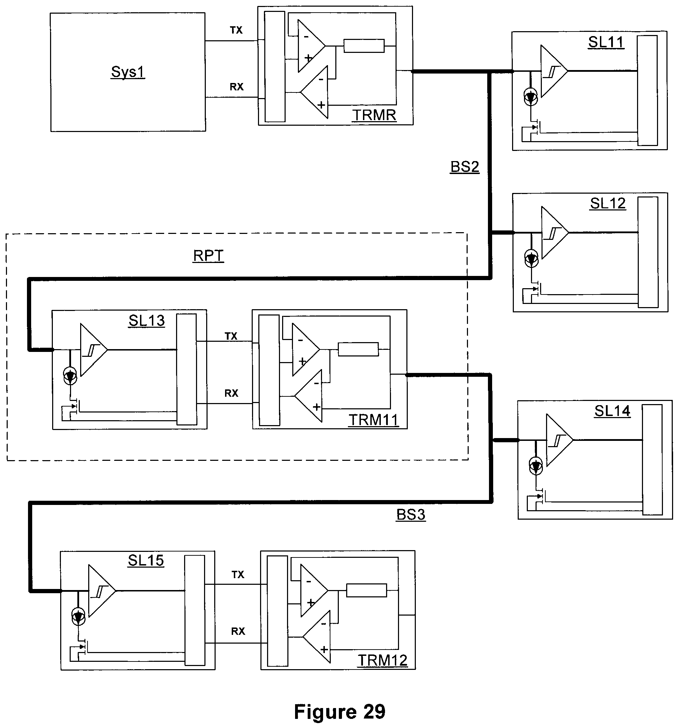

La Figure 29 représente schématiquement une seconde variante de réseau comportant des transmetteurs maître et esclave selon le premier mode de réalisation de l'invention et un répéteur de bus.
Un transmetteur maître racine TRMR, connecté à un système électronique Sys1, pilote des transmetteurs maîtres secondaires TRM11 et TRM12. Le signal maître S1 initial est émis par le transmetteur maître racine TRMR et propagé sur un premier bus BS2 le reliant aux transmetteurs esclaves SL11, SL12 et SL13. Le transmetteur esclave SL13 est relié au transmetteur maître secondaire TRM11 et forment un répéteur de bus RPT. Le répéteur de bus RPT est relié à un bus secondaire BS3 comportant les transmetteurs esclaves SL14 et SL15. Le transmetteur esclave SL15 est relié au transmetteur maître secondaire TRM12.

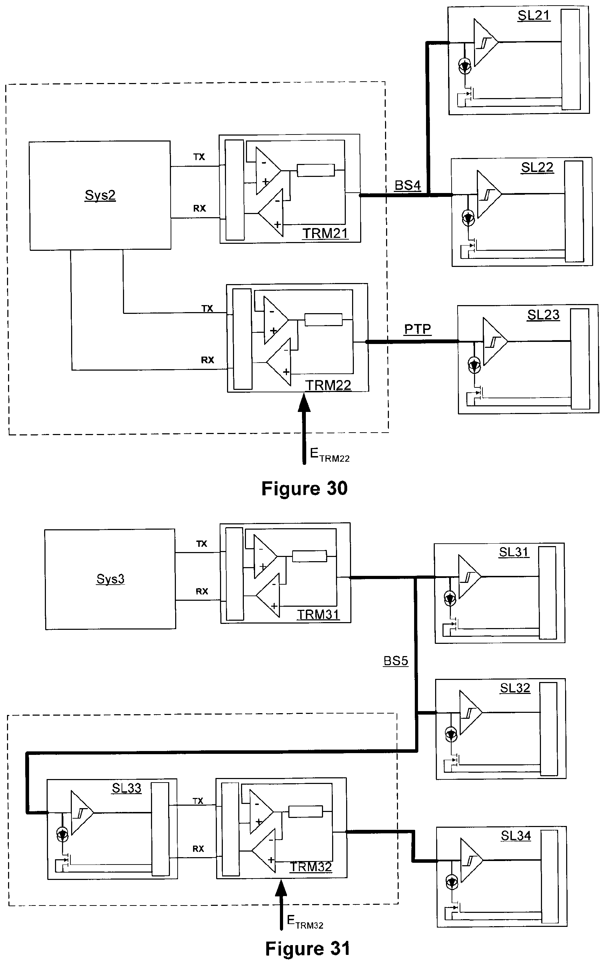

Les figures 30 et 31 montrent des montages de transmetteurs maîtres et esclaves mixtes, c'est-à-dire avec et sans transport d'énergie.
La Figure 30 représente schématiquement un système de communication mixte comportant des transmetteurs maîtres et esclaves selon le premier et le second mode de réalisation de l'invention.
Un système électronique Sys2 est relié à deux transmetteurs maîtres TRM21 et TRM22. Le premier transmetteur maître TRM21 est conforme au premier mode de réalisation de l'invention et adapté pour une communication point à point sur le bus BS4 avec les transmetteurs esclaves SL21 et SL22. Le second transmetteur maître TRM22 est conforme au second mode de réalisation de l'invention. Il est relié à une source d'énergie $E_{TRM22}$ et adapté pour une communication multipoints PTP avec le transmetteur esclave SL23.

La Figure 31 représente schématiquement une troisième variante de réseau, dit réseau hétérogène comportant des transmetteurs maître et esclave selon le premier et le second mode de réalisation de l'invention.
Un système électronique Sys3 est relié à un transmetteur maître TRM31. Le signal maître S1 initial est émis par le transmetteur maître TRM31 et propagé sur un premier bus BS5 le reliant aux transmetteurs esclaves SL31, SL32 et SL33. Le transmetteur esclave SL33 est relié à un transmetteur maître TRM32 relié à une source d'énergie $E_{TRM32}$. Le transmetteur maître TRM32 est adapté pour une communication multipoints avec un transmetteur esclave SL34.

## Economie d'énergie

Dans les deux modes de réalisation avec ou sans transport d'énergie, il est possible de mettre en œuvre un procédé de réveil du transmetteur maître par le transmetteur esclave. Pour économiser de l'énergie, il peut être utile de stopper le flux de transmission du signal maître S1. En effet, le signal maître S1 comporte une partie dynamique qui engendre une consommation d'énergie du fait de la charge et décharge du bus et du fait du maintien des fonctions logiques de codage et décodage du signal maître S1. Les transmetteurs peuvent se trouver dans trois états : actif, veille, inactif.

L'état inactif (initialisation) et l'état actif (transfert de données et d'énergie) ont été décrits précédemment.

Dans l'état de veille, le transmetteur maître fournit un signal maître S1 à l'état logique 1 permanent (c'est-à-dire un signal maître n'incluant pas d'horloge de transmission) garantissant l'alimentation du transmetteur esclave dans le mode de réalisation avec transport d'énergie. Pour que le transmetteur maître passe de l'état de veille à l'état actif, il suffit que le transmetteur esclave (ou l'un des transmetteurs esclaves pour un montage en réseau) consomme un courant. La consommation de ce courant numérisé par le transmetteur maître comme un état 1 logique entraîne la mise dans l'état actif du transmetteur maître.

Les états logiques correspondants à l'état de veille et à l'état actif sont purement conventionnels. Il est bien évident que ces états logiques peuvent être inversés.

## Avantages

Les avantages communs aux transmetteurs selon le premier mode de réalisation sans transport d'énergie et le second mode de réalisation avec transport d'énergie sont les suivants.

L'invention permet une transmission de donnée full duplex ainsi que des signaux de synchronisation sur un fil actif unique. D'une part, cette caractéristique est particulièrement avantageuse pour les systèmes flexibles et fortement contraints au niveau des coûts, voir pour certaines situations qui ne laissent pas d'alternative pour l'usage d'une technique de communication sur plusieurs fils. D'autre part, le nombre de fils de connexion a un impact direct sur la fiabilité d'une solution ainsi que le coût des connecteurs. Des aléas de fonctionnement peuvent survenir lors de faux contacts sur une partie seulement d'un connecteur multipoints et générer des dysfonctionnements. Ce risque est réduit avec le dispositif de communication à fil unique de l'invention.

Le transmetteur maître émet des données à l'adresse des esclaves par l'intermédiaire d'un étage de sortie à très faible impédance (quelques Ohms). Un tel étage de sortie permet de contrôler efficacement une ligne de transmission même si cette dernière est fortement capacitive. Ainsi, les vitesses de transmission théoriquement possibles par ce type de transmission sont bien supérieures à ceux d'autres systèmes usant d'amplificateurs asymétriques à haute impédance (e.g. I$^2$C, Bus J1850). Les pointes de courant apparaissent principalement pendant les transitions du signal maître S1 (tension) et sont dues aux capacités de ligne. La mesure du signal esclave S2 (courant) est réalisée en dehors des phases transitoires du signal maître S1, ce qui garantit une bonne immunité au bruit.

L'invention permet la mise en œuvre de répéteur de bus et la réalisation de passerelles de manière simple.

Les avantages propres aux transmetteurs selon le premier mode de réalisation sans transport d'énergie sont les suivants.

Ce mode autorise une mise en réseau par liaison multipoints. Par ailleurs, il autorise des techniques de gestion de bus sans contention ainsi que la diffusion générale de message. Il est simple à mettre en œuvre au regard des performances.

Les avantages propres aux transmetteurs selon le second mode de réalisation avec transport d'énergie sont les suivants.

Ce mode autorise de façon simple une liaison point à point seulement, tout en n'interdisant pas une liaison multipoints si la somme des courants de polarisation de l'ensemble des transmetteurs esclaves du bus est inférieure à ILL.

Il permet l'utilisation d'un seul fil pour transmettre données et énergie. Ceci peut avoir des avantages pratiques pour la conception de circuit intégré qui reçoivent plusieurs sources d'énergie, certaines d'entre elle peuvent être stoppées et les contacts d'alimentation court-circuités. Il est simple de réaliser des caissons d'isolation au niveau du circuit intégré qui gère globalement l'alimentation et la transmission.

## REMARQUES FINALES

La description détaillée qui précède faisant référence aux Figures illustre un dispositif de communication numérique bidirectionnelle présentant les caractéristiques suivantes.

Un dispositif de communication numérique bidirectionnelle comporte un transmetteur maître (SysM1, TRM1, SysM2, TRM2) relié à au moins un transmetteur esclave (SysS1, TRS1, SysS2, TRS2) par un fil de liaison actif. Le transmetteur maître et le transmetteur esclave ont une référence commune (GND). Le transmetteur maître est apte à transmettre un signal maître (S1) vers le transmetteur esclave et le transmetteur esclave est apte à transmettre un signal esclave (S2) vers le transmetteur maître. Le signal maître (S1) est une modulation numérique en tension. Le signal esclave (S2) est une modulation numérique en courant.

Selon un autre aspect de l'invention, le dispositif de communication numérique bidirectionnelle comporte les caractéristiques optionnelles suivantes.

Le transmetteur maître (SysM1, TRM1, SysM2, TRM2) comporte :

- une boucle de tension (OB) d'impédance faible au travers de laquelle le signal maître (S1) est transmis, le signal maître (S1) comprenant une horloge de transmission et des données, et

- un moyen de numérisation (STM, DM, Rcs) apte à numériser deux valeurs discrètes du signal esclave (S2), interprété comme des valeurs binaires 0 ou 1 (le moyen de numérisation comporte un circuit de mesure du courant consommé par le transmetteur esclave).

Le transmetteur esclave (SysS1, TRS1, SysS2, TRS2) comporte :

- une boucle de courant (IB) au travers de laquelle le signal esclave (S2) est transmis, le signal esclave (S2) comprenant des données et étant synchronisé par le signal maître (S1), et

- un moyen de réception du signal maître (S1) et un moyen d'extraction (DEC1, DEC2) de la donnée et de l'horloge de transmission du signal maître (S1).

Selon un premier mode de réalisation de l'invention dit avec transfert d'énergie, le transmetteur maître (SysM1, TRM1, SysM2, TRM2) et le transmetteur esclave (SysS1, TRS1, SysS2, TRS2) sont couplés à une alimentation (En).

Selon un second mode de réalisation de l'invention, dit avec transfert d'énergie, seul le transmetteur maître (SysM1, TRM1, SysM2, TRM2) est couplé à une alimentation (En). Le transmetteur maître transmet un signal maître (S1) polarisé vers le transmetteur esclave (SysS1, TRS1, SysS2, TRS2), le signal maître (S1) polarisé étant une modulation numérique en tension laquelle comprend une horloge de transmission, des données et une tension de polarisation (de l'énergie).

La description détaillée qui précède faisant référence aux Figures illustre également un procédé de communication numérique bidirectionnelle présentant les caractéristiques suivantes.

Le procédé de communication bidirectionnelle entre un transmetteur maître (SysM1, TRM1, SysM2, TRM2) et au moins un transmetteur esclave (SysS1, TRS1, SysS2, TRS2) reliés par un fil de liaison actif, comporte une étape de transmission d'un signal maître (S1), le signal maître (S1) étant une modulation numérique en tension (comprenant une horloge de transmission et des données), et une étape de transmission d'un signal esclave (S2), le signal esclave (S2) étant une modulation numérique en courant (comprenant des données).

Selon un autre mode de réalisation de l'invention, dit avec transport d'énergie, le procédé comporte en outre une étape de polarisation du signal maître (S1) avant l'étape de transmission du signal maître (S1), le signal maître (S1) résultant comprenant une horloge de transmission, des données et une tension de polarisation (de l'énergie).

Selon un autre aspect de l'invention, le procédé de communication numérique bidirectionnelle comporte les caractéristiques suivantes.

Le signal esclave (S2) est synchronisé par le signal maître (S1).

Le procédé comporte une étape supplémentaire de numérisation de deux valeurs discrètes du signal esclave (S2), interprété comme des valeurs binaires 0 ou 1 logique, et une étape d'extraction de la donnée et de l'horloge de transmission du signal maître (S1) reçu.

Selon un autre aspect de l'invention, l'étape de numérisation consiste à interpréter comme des valeurs binaires 0 ou 1 logique le courant consommé par le, au moins un, transmetteur esclave (SysS1, TRS1, SysS2, TRS2).

Selon un autre aspect de l'invention, le procédé de communication numérique bidirectionnelle comporte les caractéristiques optionnelles suivantes.

La modulation du signal maître (S1) est du type Pulse Width Modulation (PWM) définissant un codage binaire, un 1 logique et un 0 logique étant identifiés par deux rapports cycliques distincts. Par convention, le 0 logique est identifié par un rapport cyclique de ¾ d'un bit transmis et le 1 logique est identifié par un rapport cyclique de ¼ d'un bit transmis.

De manière avantageuse, l'identification de chaque valeur logique contenu dans le signal maître (S1) consiste à mesurer le rapport cyclique du signal maître (S1) par une étape de comptage/décomptage utilisant une horloge asynchrone de l'horloge de transmission et de fréquence au moins quatre fois supérieure.

Plus particulièrement, l'identification de la valeur logique du signal maître (S1) est liée au signe de la valeur de comptage.

Selon encore un autre aspect de l'invention, le procédé de communication numérique bidirectionnelle comporte les caractéristiques optionnelles suivantes.

L'absence pendant une durée déterminée du signal d'horloge du signal maître (S1) est interprétée par le transmetteur esclave comme une remise à zéro (signal de RESET). Alternativement, l'absence pendant une durée déterminée de la polarisation ou du signal d'horloge du signal maître (S1) est interprétée par le transmetteur esclave comme une remise à zéro.

La transmission par le transmetteur maître d'un signal maître (S1) à un état 1 permanent n'incluant pas d'horloge de transmission définit un état de veille. Selon la réalisation de la présente invention, la consommation par le transmetteur esclave d'un courant numérisé par le transmetteur maître comme un 1 logique est interprétée par le transmetteur maître comme un passage de l'état de veille à un état actif.

Les figures et leurs descriptions faites ci-dessus illustrent l'invention plutôt qu'elles ne la limitent. Les signes de références dans les revendications n'ont aucun caractère limitatif. Les verbes "comprendre" et "comporter" n'excluent pas la présence d'autres éléments que ceux listés dans les revendications. Le mot "un" précédant un élément n'exclue pas la présence d'une pluralité de tels éléments.

Les deux modes de réalisation de l'invention ont été illustrés par des exemples de réalisation fonctionnelle. De nombreuses autres implémentations techniques sont possibles pour satisfaire aux fonctions requises par l'invention. A titre d'exemple d'autres solutions sont possibles pour détecter le courant consommé par le transmetteur esclave ou pour émettre des signaux avec une faible impédance de sortie.

Enfin, l'homme du métier sait également qu'il devra ajouter d'autres fonctions afin de protéger le circuit électronique contre les décharges électrostatiques ("Electro Static Discharge" ESD), les surcharges de courant et de tension et prévoir des aménagements afin de se prémunir contre les dispersions de procédés de fabrication, etc.... Ces protections et aménagements n'ont pas été décrits car ils ne constituent pas l'objet de l'invention et auraient alourdi l'exposé de l'invention.

## Revendications

1. Dispositif de communication bidirectionnelle comportant un transmetteur maître (SysM1, TRM1, SysM2, TRM2) relié à au moins un transmetteur esclave (SysS1, TRS1, SysS2, TRS2) par un fil de liaison actif, le transmetteur maître et le transmetteur esclave ayant une référence commune (GND), le transmetteur maître étant apte à transmettre un signal maître (S1) vers le transmetteur esclave et le transmetteur esclave étant apte à transmettre un signal esclave (S2) vers le transmetteur maître, dans lequel le signal maître (S1) est une modulation numérique en tension et le signal esclave (S2) est une modulation numérique en courant, dans lequel, pendant un état actif du transmetteur maître, le signal maître comporte une horloge de transmission et le signal esclave est synchronisé par le signal maître, et dans lequel, le transmetteur maître comporte un état de veille dans lequel le signal maître n'inclut plus l'horloge de transmission, **caractérisé en ce que** le transmetteur maître comporte un moyen de numérisation (STM, DM, Rcs) apte à numériser deux valeurs discrètes du signal esclave (S2), interprété comme des valeurs binaires 0 ou 1, et **en ce que** le transmetteur maître est configuré pour interpréter comme un passage de l'état de veille à un état actif dudit transmetteur maître, la consommation par le transmetteur esclave, ou l'un des transmetteurs esclaves, d'un courant numérisé par le transmetteur maître comme un état 1 logique.

2. Dispositif de communication numérique bidirectionnelle selon la revendication 1, **caractérisé en ce que** :

   a) le transmetteur maître (SysM1, TRM1, SysM2, TRM2) comporte :

   - une boucle de tension (OB) d'impédance au travers de laquelle le signal maître (S1) est transmis, le signal maître (S1) comprenant des données,

   b) le, au moins un, transmetteur esclave (SysS1, TRS1, SysS2, TRS2) comporte :

   - une boucle de courant (IB) au travers de laquelle le signal esclave (S2) est transmis, le signal esclave (S2) comprenant des données, et
   - un moyen de réception du signal maître (S1) et un moyen d'extraction (DEC1, DEC2) de la donnée et de l'horloge de transmission du signal maître (S1).

3. Dispositif selon la revendication 1 ou 2, **caractérisé en ce que** seul le transmetteur maître (SysM1, TRM1, SysM2, TRM2) est couplé à une alimentation (En), le transmetteur maître transmettant un signal maître (S1) polarisé vers le transmetteur esclave (SysS1, TRS1, SysS2, TRS2), le signal maître (S1) polarisé étant une modulation numérique en tension laquelle comprend en outre des données et une tension de polarisation.

4. Dispositif selon la revendication 1 ou 2, **caractérisé en ce qu'**au moins deux transmetteurs esclaves (TRSL1, TRSL2) et un transmetteur maître (TRMA) sont connectés à un bus de communication (BS1).

5. Dispositif selon l'une des revendications précédentes, **caractérisée en ce que** la combinaison d'un transmetteur maître (TRM11) et d'un transmetteur esclave (TRSL11) dans un bus de communication forme un répéteur de bus (RPT).

6. Procédé de communication bidirectionnelle entre un transmetteur maître (SysM1, TRM1, SysM2, TRM2) et au moins un transmetteur esclave (SysS1, TRS1, SysS2, TRS2) reliés par un fil de liaison actif, le transmetteur maître et le transmetteur esclave ayant une référence commune (GND), le transmetteur maître étant apte à transmettre un signal maître (S1) vers le transmetteur esclave et le transmetteur esclave étant apte à transmettre un signal esclave (S2) vers le transmetteur maître, dans lequel le transmetteur maître dispose d'un état actif au cours duquel le procédé comporte les étapes suivantes :

   a) transmettre un signal maître (S1), le signal maître (S1) étant une modulation numérique en tension qui comporte des données et une horloge de transmission, et
   b) transmettre un signal esclave (S2), le signal esclave (S2) étant une modulation numérique en courant et comporte des données synchronisées par le signal maître,

   et dans lequel le transmetteur maître comporte un état de veille dans lequel le signal maître n'inclut plus l'horloge de transmission, **caractérisé en ce que** le procédé comporte également une étape de numérisation de deux valeurs discrètes du signal esclave (S2), interprété comme des valeurs binaires 0 ou 1 logique, et **en ce que** la consommation par le transmetteur esclave, ou l'un des transmetteurs esclaves, d'un courant numérisé par le transmetteur maître comme un 1 logique est interprétée par le transmetteur maître comme un passage de l'état de veille à un état actif dudit transmetteur maître.

7. Procédé de communication selon la revendication 6, **caractérisé en ce qu'**il comporte une étape d'extraction, du signal maître (S1) reçu, de la donnée et de l'horloge de transmission.

8. Procédé selon la revendication 7, **caractérisé en ce que** l'étape de numérisation consiste à interpréter comme des valeurs binaires 0 ou 1 logique le courant consommé par le, au moins un, transmetteur esclave (SysS1, TRS1, SysS2, TRS2).

9. Procédé selon l'une des revendications 6 à 8, **caractérisé en ce que** le procédé comporte en outre une étape de polarisation du signal maître (S1) avant l'étape de transmission du signal maître (S1), le signal maître (S1) résultant étant une modulation numérique en tension laquelle comprend une horloge de transmission, des données et une tension de polarisation.

10. Procédé selon l'une des revendications 6 à 9, **caractérisé en ce que** la modulation du signal maître (S1) est du type Pulse Width Modulation (PWM) définissant un codage binaire, un 1 logique et un 0 logique étant identifiés par deux rapports cycliques distincts.

11. Procédé selon la revendication 10, **caractérisé en ce que** le 0 logique est identifié par un rapport cyclique de ¾ d'un bit transmis et le 1 logique est identifié par un rapport cyclique de ¼ d'un bit transmis.

12. Procédé selon l'une des revendications 6 à 11, **caractérisé en ce que** la période du signal maître (S1) est variable.

13. Procédé selon l'une des revendications 7 à 8, **caractérisé en ce que** la valeur numérisée du signal esclave (S2) est échantillonnée sur un front descendant du signal maître (S1).

14. Procédé selon la revendication 9, **caractérisé en ce que** la valeur numérisée du signal esclave (S2) est échantillonnée sur un front montant du signal maître (S1).

15. Procédé selon la revendication 10 ou 11, **caractérisé en ce que** l'identification de chaque valeur logique contenu dans le signal maître (S1) consiste à mesurer le rapport cyclique du signal maître (S1) par une étape de comptage/décomptage utilisant une horloge asynchrone de l'horloge de transmission et de fréquence au moins quatre fois supérieure.

16. Procédé selon la revendication 15, **caractérisé en ce que** l'identification de la valeur logique du signal maître (S1) est liée au signe de la valeur de comptage.

17. Procédé selon la revendication 7, **caractérisé en ce que** l'absence pendant une durée déterminée du signal d'horloge du signal maître (S1) est interprétée par le transmetteur esclave comme une remise à zéro.

18. Procédé selon la revendication 8, **caractérisé en ce que** l'absence pendant une durée déterminée de la polarisation ou du signal d'horloge du signal maître (S1) est interprétée par le transmetteur esclave comme une remise à zéro.

19. Procédé selon l'une des revendications 6 à 18, **caractérisé en ce que** la transmission par le transmetteur maître d'un signal maître (S1) à un état 1 permanent n'incluant pas d'horloge de transmission définit l'état de veille.

20. Réseau de communication comportant un bus de communication (BS1, BS2, BS3, BS4), **caractérisé en ce qu'**il comporte une pluralité de dispositif de communication numérique bidirectionnelle selon les revendications 1 à 5.

**Patentansprüche**

1. Zweiwegsvermittlungsvorrichtung, die einen Master-Sender (SysM1, TRM1, SysM2, TRM2) umfasst, der über einen aktiven Verbindungsdraht mit mindestens einem Slave-Sender (SysS1, TRS1, SysS2, TRS2) verbunden ist, wobei der Master-Sender und der Slave-Sender eine gemeinsame Referenz (GND) aufweisen, wobei der Master-Sender dazu geeignet ist, ein Master-Signal (S1) an den Slave-Sender zu übertragen, und der Slave-Sender dazu geeignet ist, ein Slave-Signal (S2) an den Master-Sender zu übertragen, wobei das Master-Signal (S1) eine digitale Spannungsmodulation ist, und das Slave-Signal (S2) eine digitale Strommodulation ist, wobei während eines aktiven Zustands des Master-Senders das Master-Signal einen Übertragungstakt umfasst, und das Slave-Signal durch das Master-Signal synchronisiert wird, und wobei der Master-Sender einen Standby-Zustand aufweist, in dem das Master-Signal den Übertragungstakt nicht mehr beinhaltet, **dadurch gekennzeichnet, dass** der Master-Sender ein Digitalisierungsmittel (STM, DM, Rcs) umfasst, das dazu geeignet ist, zwei diskrete Werte des Slave-Signals (S2) zu digitalisieren, die als Binärwerte 0 oder 1 interpretiert werden, und dass der Master-Sender derart konfiguriert ist, dass er den Verbrauch durch den Slave-Sender oder einen der Slave-Sender eines digitalisierten Stroms, der von dem Master-Sender als logischer 1-Zustand digitalisiert ist, als einen Übergang von dem Standby-Zustand auf einen aktiven Zustand des Master-Senders interpretiert.

2.  Digitale Zweiwegsvermittlungsvorrichtung nach Anspruch 1, **dadurch gekennzeichnet, dass**:

    a) der Master-Sender (SysM1, TRM1, SysM2, TRM2) umfasst:

    - eine Impedanzspannungsschleife (OB), durch die das Master-Signal (S1) übertragen wird, wobei das Master-Signal (S1) Daten umfasst,

    b) der mindestens eine Slave-Sender (SysS1, TRS1, SysS2, TRS2) umfasst:

    - eine Stromschleife (IB), durch die das Slave-Signal (S2) übertragen wird, wobei das Slave-Signal (S2) Daten umfasst, und
    - ein Mittel zum Empfangen des Master-Signals (S1) und ein Mittel zum Extrahieren (DEC1, DEC2) des Datums und des Übertragungstakts des Master-Signals (S1).

3.  Vorrichtung nach Anspruch 1 oder 2, **dadurch gekennzeichnet, dass** nur der Master-Sender (SysM1, TRM1, SysM2, TRM2) an eine Versorgung (En) gekoppelt ist, wobei der Master-Sender ein vorgespanntes Master-Signal (S1) an den Slave-Sender (SysS1, TRS1, SysS2, TRS2) überträgt, wobei das vorgespannte Master-Signal (S1) eine digitale Spannungsmodulation ist, die außerdem Daten und eine Vorspannung umfasst.

4.  Vorrichtung nach Anspruch 1 oder 2, **dadurch gekennzeichnet, dass** mindestens zwei Slave-Sender (TRSL1, TRSL2) und ein Master-Sender (TRMA) mit einem Vermittlungsbus (BS1) verbunden sind.

5.  Vorrichtung nach einem der vorstehenden Ansprüche, **dadurch gekennzeichnet, dass** die Kombination eines Master-Senders (TRM11) und eines Slave-Senders (TRSL11) in einem Vermittlungsbus einen Bus-Repeater (RPT) bildet.

6.  Zweiwegsvermittlungsverfahren zwischen einem Master-Sender (SysM1, TRM1, SysM2, TRM2) und mindestens einem Slave-Sender (SysS1, TRS1, SysS2, TRS2), die über einen aktiven Verbindungsdraht verbunden sind, wobei der Master-Sender und der Slave-Sender eine gemeinsame Referenz (GND) aufweisen, wobei der Master-Sender dazu geeignet ist, ein Master-Signal (S1) an den Slave-Sender zu übertragen, und der Slave-Sender dazu geeignet ist, ein Slave-Signal (S2) an den Master-Sender zu übertragen, in dem der Master-Sender über einen aktiven Zustand verfügt, in dessen Verlauf das Verfahren die folgenden Schritte umfasst:

    a) Übertragen eines Master-Signals (S1), wobei das Master-Signal (S1) eine digitale Spannungsmodulation ist, die Daten und einen Übertragungstakt umfasst, und
    b) Übertragen eines Slave-Signals (S2), wobei das Slave-Signal (S2) eine digitale Strommodulation ist und Daten umfasst, die durch das Master-Signal synchronisiert sind,

    und wobei der Master-Sender einen Standby-Zustand umfasst, in dem das Master-Signal den Übertragungstakt nicht mehr beinhaltet, **dadurch gekennzeichnet, dass** das Verfahren auch einen Schritt des Digitalisierens zweier diskreter Werte des Slave-Signals (S2) umfasst, die als Binärwerte logisch 0 oder 1 interpretiert werden, und dadurch, dass der Verbrauch durch den Slave-Sender oder einen der Slave-Sender eines Stroms, der durch den Master-Sender als logische 1 digitalisiert ist, als ein Übergang von dem Standby-Zustand auf einen aktiven Zustand des Master-Senders interpretiert wird.

7.  Vermittlungsverfahren nach Anspruch 6, **dadurch gekennzeichnet, dass** es einen Schritt des Extrahierens des empfangenen Master-Signals (S1), des Datums und des Übertragungstakts umfasst.

8.  Verfahren nach Anspruch 7, **dadurch gekennzeichnet, dass** der Schritt des Digitalisierens darin besteht, den Strom, der von dem mindestens einen Slave-Sender (SysS1, TRS1, SysS2, TRS2) verbraucht wird, als Binärwerte logisch 0 oder 1 zu interpretieren.

9.  Verfahren nach einem der Ansprüche 6 bis 8, **dadurch gekennzeichnet, dass** das Verfahren außerdem einen Schritt des Vorspannens des Master-Signals (S1) vor dem Schritt des Sendens des Master-Signals (S1) umfasst, wobei das resultierende Master-Signal (S1) eine digitale Spannungsmodulation ist, die einen Übertragungstakt, Daten und eine Vorspannung umfasst.

10. Verfahren nach einem der Ansprüche 6 bis 9, **dadurch gekennzeichnet, dass** die Modulation des Master-Signals (S1) vom Typ Pulse Width Modulation (PWM, Pulsbreitenmodulation) ist, der eine binäre Codierung definiert, wobei eine logische 1 und eine logische 0 durch zwei getrennte Taktverhältnisse identifiziert werden.

11. Verfahren nach Anspruch 10, **dadurch gekennzeichnet, dass** die logische 0 durch ein Taktverhältnis von ¾ eines übertragenen Bits identifiziert wird, und die logische 1 durch ein Taktverhältnis von ¼ eines übertragenen Bits identifiziert wird.

12. Verfahren nach einem der Ansprüche 6 bis 11, **dadurch gekennzeichnet, dass** die Periode des Master-Signals (S1) variabel ist.

13. Verfahren nach einem der Ansprüche 7 bis 8, **dadurch gekennzeichnet, dass** der digitalisierte Wert des Slave-Signals (S2) auf einer fallenden Flanke des Master-Signals (S1) abgetastet wird.

14. Verfahren nach Anspruch 9, **dadurch gekennzeichnet, dass** der digitalisierte Wert des Slave-Signals (S2) auf einer ansteigenden Flanke des Master-Signals (S1) abgetastet wird.

15. Verfahren nach Anspruch 10 oder 11, **dadurch gekennzeichnet, dass** die Identifizierung jedes in dem Master-Signal (S1) enthaltenen logischen Wertes darin besteht, das Taktverhältnis des Master-Signals (S1) durch einen Zähl-/Abwärtszählschritt unter Verwenden eines asynchronen Übertragungstakts und mit mindestens viermal höherer Frequenz zu messen.

16. Verfahren nach Anspruch 15, **dadurch gekennzeichnet, dass** die Identifizierung des logischen Wertes des Master-Signals (S1) mit dem Vorzeichen des Zählwertes verbunden ist.

17. Verfahren nach Anspruch 7, **dadurch gekennzeichnet, dass** das Fehlen des Taktsignals des Master-Signals (S1) während einer bestimmten Dauer von dem Slave-Sender als eine Rückstellung auf Null interpretiert wird.

18. Verfahren nach Anspruch 8, **dadurch gekennzeichnet, dass** das Fehlen der Vorspannung oder des Taktsignals des Master-Signals (S1) während einer bestimmten Dauer von dem Slave-Sender als eine Rückstellung auf Null interpretiert wird.

19. Verfahren nach einem der Ansprüche 6 bis 18, **dadurch gekennzeichnet, dass** die Übertragung eines Master-Signals (S1) durch den Master-Sender in einem permanenten Zustand 1, der keinen Übertragungstakt beinhaltet, den Standby-Zustand definiert.

20. Vermittlungsnetz, das einen Vermittlungsbus (BS1, BS2, BS3, BS4) umfasst, **dadurch gekennzeichnet, dass** er eine Vielzahl digitaler Zweiwegsvermittlungsvorrichtungen nach den Ansprüchen 1 bis 5 umfasst.

**Claims**

1. Bidirectional communication device comprising a master transmitter (SysM1, TRM1, SysM2, TRM2) connected to at least one slave transmitter (SysS1, TRS1, SysS2, TRS2) by an active connecting wire, the master transmitter and the slave transmitter having a common reference (GND), the master transmitter being able to transmit a master signal (S1) to the slave transmitter and the slave transmitter being able to transmit a slave signal (S2) to the master transmitter, wherein the master signal (S1) is a digital voltage modulation and the slave signal (S2) is a digital current modulation, wherein, during an active state of the master transmitter, the master signal comprises a transmission clock and the slave signal is synchronised by the master signal, and wherein the master transmitter comprises a standby state in which the master signal no longer includes the transmission clock, **characterised in that** the master transmitter comprises a digitising means (STM, DM, $R_{CS}$) able to digitise two discrete values of the slave signal (S2), interpreted as binary values 0 or 1, and **in that** the master transmitter is configured to interpret as a passage of said master transmitter from the standby state to the active state, the consumption by the slave transmitter, or one of the slave transmitters, of a current digitised by the master transmitter as a logic state 1.

2. Bidirectional digital communication device according to claim 1, **characterised in that**:

    a) the master transmitter (SysM1, TRM1, SysM2, TRM2) comprises:

        - an impedance voltage loop (OB) through which the master signal (S1) is transmitted, the master signal (S1) comprising data,

    b) the at least one slave transmitter (SysS1, TRS1, SysS2, TRS2) comprises:

        - a current loop (IB) through which the slave signal (S2) is transmitted, the slave signal (S2) comprising data, and
        - a means for receiving the master signal (S1) and a means for extracting (DEC1, DEC2) the data and the transmission clock from the master signal (S1).

3. Device according to claim 1 or 2, **characterised in that** only the master transmitter (SysM1, TRM1, SysM2, TRM2) is coupled to a power supply (En), the master transmitter transmitting a polarised master signal (S1) to the slave transmitter (SysS1, TRS1, SysS2, TRS2), the polarised master signal (S1) being a digital voltage modulation which also comprises data and a polarising voltage.

4. Device according to claim 1 or 2, **characterised in that** at least two slave transmitters (TRSL1, TRSL2) and a master transmitter (TRMA) are connected to a communication bus (BS1).

5. Device according to one of the preceding claims, **characterised in that** the combination of a master transmitter (TRM11) and a slave transmitter (TRSL11) in a communication bus forms a bus repeater (RPT).

6. Bidirectional communication method between a master transmitter (SysM1, TRM1, SysM2, TRM2) and at least one slave transmitter (SysS1, TRS1, SysS2, TRS2) connected by an active connecting wire, the master transmitter and the slave transmitter having a common reference (GND), the master transmitter being able to transmit a master signal (S1) to the slave transmitter and the slave transmitter being able to transmit a slave signal (S2) to the master transmitter, wherein the master transmitter has an active state during which the method comprises the following steps:

> a) transmitting a master signal (S1), the master signal (S1) being a digital voltage modulation comprising data and a transmission clock, and
> b) transmitting a slave signal (S2), the slave signal (S2) being a digital current modulation and comprising data synchronised by the master signal,

and wherein the master transmitter comprises a standby state in which the master signal no longer includes the transmission clock, **characterised in that** the method also comprises a step of digitising two discrete values of the slave signal (S2), interpreted as binary values logic 0 or 1, and **in that** the consumption by the slave transmitter or one of the slave transmitters, of a current digitised by the master transmitter as a logic 1 is interpreted by the master transmitter as the passage of said master transmitter from the standby state to the active state.

7. Communication method according to claim 6, **characterised in that** it comprises a step of extracting the data and the transmission clock from the received master signal (S1).

8. Method according to claim 7, **characterised in that** the digitisation step consists in interpreting as binary values logic 0 or 1 the current consumed by the at least one slave transmitter (SysS1, TRS1, SysS2, TRS2).

9. Method according to one of claims 6 to 8, **characterised in that** the method further comprises a step of polarising the master signal (S1) before the step of transmitting the master signal (S1), the resulting master signal (S1) being a digital voltage modulation which comprises a transmission clock, data and a polarising voltage.

10. Method according to one of claims 6 to 9, **characterised in that** the modulation of the master signal (S1) is of the pulse-width modulation (PWM) type defining a binary coding, a logic 1 and a logic 0 being identified by two separate duty cycles.

11. Method according to claim 10, **characterised in that** the logic 0 is identified by a duty cycle of ¾ of a transmitted bit and the logic 1 is identified by a duty cycle of ¼ of a transmitted bit.

12. Method according to one of claims 6 to 11, **characterised in that** the period of the master signal (S1) is variable.

13. Method according to one of claims 7 to 8, **characterised in that** the digitised value of the slave signal (S2) is sampled on a falling edge of the master signal (S1).

14. Method according to claim 9, **characterised in that** the digitised value of the slave signal (S2) is sampled on a rising edge of the master signal (S1).

15. Method according to claim 10 or 11, **characterised in that** the identification of each logical value contained in the master signal (S1) consists in measuring the duty cycle of the master signal (S1) by a step of counting / counting down using an asynchronous clock of the transmission clock and with a frequency at least four times higher.

16. Method according to claim 15, **characterised in that** the identification of the logical value of the master signal (S1) is linked to the sign of the count value.

17. Method according to claim 7, **characterised in that** the absence for a determined period of the clock signal from the master signal (S1) is interpreted by the slave transmitter as a reset.

18. Method according to claim 8, **characterised in that** the absence for a determined period of the polarisation or of the clock signal of the master signal (S1) is interpreted by the slave transmitter as a reset.

19. Method according to one of claims 6 to 18, **characterised in that** the transmission by the master transmitter of a master signal (S1) in a permanent state 1 not including a transmission clock defines the standby state.

20. Communication network comprising a communication bus (BS1, BS2, BS3, BS4), **characterised in that** it comprises a plurality of bidirectional digital communication devices according to claims 1 to 5.

**Figure 1**

**Figure 2**

SysM1

CL1

VDD1

TRX →

CLK_TX →

TOP →

RTX ←

RST →

LOGM

TXM1 →

RXM1 ←

TRM1

OUT1    N1

## Figure 3

SysS1

VDD1

CL1

N1    IN1

TRS1

RXS1 →

TXS1 ←

LOGS

DRXS1

VALS1

TOPS1

DTXS1

RSTS1

## Figure 4

**Figure 5**

**Figure 6**

EP 1 612 985 B1

**Figure 7**

**Figure 8**

22

**Figure 9**

**Figure 10**

EP 1 612 985 B1

Figure 11

24

**Figure 12**

Figure 13

Figure 14

Figure 15

Figure 16

Figure 17

Figure 18

Figure 19

Figure 20

**Figure 21**

**Figure 22**

**Figure 23**

**Figure 24**

**Figure 25**

**Figure 26**

| FL1 | HD | PL | CK | FL2 |
|-----|-----|-----|-----|-----|

| 0 | 1 | 1 | 1 | 1 | 1 | 1 | 0 |
|---|---|---|---|---|---|---|---|

6 x 1

| 0 | 1 | 1 | 1 | 1 | 1 | 1 | 0 |
|---|---|---|---|---|---|---|---|

6 x 1

| 0 | 1 | 1 | 1 | 1 | 1 | 1 | 1 | 1 | 1 | 1 | 1 | 1 | 1 | 1 | 1 | 1 | 1 | 1 | 1 | 1 | 1 |
|---|---|---|---|---|---|---|---|---|---|---|---|---|---|---|---|---|---|---|---|---|---|

| 0 | 1 | 1 | 1 | 1 | 1 | 0 | 1 | 1 | 1 | 1 | 1 | 0 | 1 | 1 | 1 | 1 | 1 | 0 | 1 | 1 | 1 | 1 | 1 |
|---|---|---|---|---|---|---|---|---|---|---|---|---|---|---|---|---|---|---|---|---|---|---|---|

BT1     BT2     BT3

**Figure 27**

| 1 | 1 | 0 | 0 | 0 | 0 | 0 | 0 | 1 | 0 | 0 | 1 | 1 | 1 | 1 | 1 | 1 | 1 | 1 | 1 | 0 | 0 |
|---|---|---|---|---|---|---|---|---|---|---|---|---|---|---|---|---|---|---|---|---|---|

**Figure 28**

**Figure 29**

Figure 30

Figure 31

**RÉFÉRENCES CITÉES DANS LA DESCRIPTION**

**Documents brevets cités dans la description**

- US 5619066 A
- US 5517015 A
- EP 0406718 A
- EP 0583716 A
- US 6188314 B